# EUROPEAN PATENT APPLICATION

(11) **EP 4 529 334 A1**
(43) Date of publication of application: **26.03.2025**
(21) Application number: 24202540.1
(22) Date of filing: 25.09.2024
(51) Int. Cl.: H04W 74/00, H04W 84/12

(54) **TRIGGERED TRANSMISSION OPPORTUNITY SHARING (TXS)-BASED RELAYING**

(30) Priority: 25.09.2023 US 202363540134 P; 09.11.2023 US 202363597358 P; 11.12.2023 US 202363608330 P
(71) Applicant: Comcast Cable Communications, LLC, Philadelphia, PA 19103 (US)
(72) Inventor: ERKUCUK, Serhat, Philadelphia, 19103 (US); KIM, Jeongki, Philadelphia, 19103 (US); DINAN, Esmael Hejazi, Philadelphia, 19103 (US); LANANTE, Leonardo Alisasis, Philadelphia, 19103 (US)
(74) Representative: V.O.

(57) **Abstract**

One or more stations may communicate with an access point via one or more relay stations. The one or more stations and relay station(s) may receive an indication indicating allocated resources and a type of communication. One or more times periods, within a particular allocated resource, may be indicated for use by one or more stations to communicate with the access point using at least one relay station. Based on the indication, the one or more stations and relay station(s) may be configured to activate a relaying procedure for communication with the access point.

## Description

### CROSS-REFERENCE TO RELATED APPLICATIONS

This application claims the benefit of U.S. Provisional Application No. 63/540,134, filed on September 25, 2023, U.S. Provisional Application No. 63/597,358, filed on November 9, 2023 and U.S. Provisional Application No. 63/608,330, filed on December 11, 2023. The above referenced applications are hereby incorporated by reference in their entireties.

### BACKGROUND

An access point communicates with various computing devices, such as stations. The access point allocates resources of a transmission opportunity to the stations for such communications.

### SUMMARY

The following summary presents a simplified summary of certain features. The summary is not an extensive overview and is not intended to identify key or critical elements.

An access point may communicate with computing devices such as wireless devices and/or stations. One or more stations (e.g., a second station) may communicate with the access point via one or more relay stations (e.g., a first station). The access point may indicate resources (e.g., transmission opportunity/ies) allocated to the first station and the second station. For example, the access point may indicate a first time period, of a transmission opportunity, that is allocated to the first station and a second time period, of the same transmission opportunity, that is allocated to the second station. Additionally or alternatively, the access point may indicate that the first time period and the second time period are for a transmission between the access point and the second station via the first station (e.g., using the first station as a relay station). Additionally or alternatively, the access point may indicate a type of communication (e.g., uplink or downlink) for the transmission. Based on the access point indication(s), the first station and the second station may be configured to activate a relaying procedure for communication with the access point.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example format of a physical layer (PHY) protocol data unit (PPDU).
FIG. 6 shows an example of a sub-1 GHz (S1G) relay architecture.
FIG. 7 shows an example of source-relay-destination link.
FIG. 8 is an example showing relaying with no transmission opportunity (TXOP) protection.
FIG. 9 shows an example of Request-to-Send (RTS)/Clear-to-Send (CTS) procedure.
FIG. 10 shows an example showing relaying with TXOP protection.
FIG. 11 shows an example of a Multi-User Request-to-Send (MU-RTS) trigger frame which may be used in a triggered Transmission Opportunity (TXOP) sharing (TXS) procedure.
FIG. 12 shows an example of a common info field of an MRTT frame which may be used in a TXS procedure.
FIG. 13 shows an example of a triggered TXS procedure (e.g., Mode =1).
FIG. 14 shows an example of a triggered TXS procedure (e.g., Mode =2).
FIG. 15 shows an example of a TXS procedure for allocating time within an obtained TXOP to multiple stations, with a respective triggered TXOP sharing mode indicated per station.
FIG. 16 shows an example of a TXS-based relaying procedure, which may be used for relaying downlink traffic from an AP to a station.
FIG. 17 shows an example of a TXS-based relaying procedure, which may be used for relaying uplink traffic from a station to an AP.
FIG. 18 shows an example of a TXS-based relaying procedure, which may be used for relaying uplink traffic from a station to an AP.
FIG. 19 shows another example of a TXS-based relaying procedure, which may be used for relaying uplink traffic from a station to an AP.
FIG. 20 shows an example of a TXS-based relaying procedure, which may be used for relaying downlink traffic from an AP to a station.
FIG. 21 shows another example of a TXS-based relaying procedure, which may be used for relaying downlink traffic from an AP to a station.
FIG. 22 shows another example of a TXS-based relaying procedure, which may be used for relaying downlink traffic from an AP to a station.
FIG. 23 shows another example of a TXS-based relaying procedure, which may be used for relaying downlink traffic from an AP to a station.
FIG. 24 shows an example process of a TXS-based relaying procedure.
FIG. 25 shows another example process of a TXS-based relaying procedure.
FIG. 26 shows another example process of a TXS-based relaying procedure.
FIG. 27 shows another example process of a TXS-based relaying procedure.
FIG. 28 shows another example of a TXS-based relaying procedure, which may be used for relaying uplink traffic from a station to an AP.
FIG. 29 shows another example of a TXS-based relaying procedure, which may be used for relaying uplink traffic from a station to an AP.
FIG. 30 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

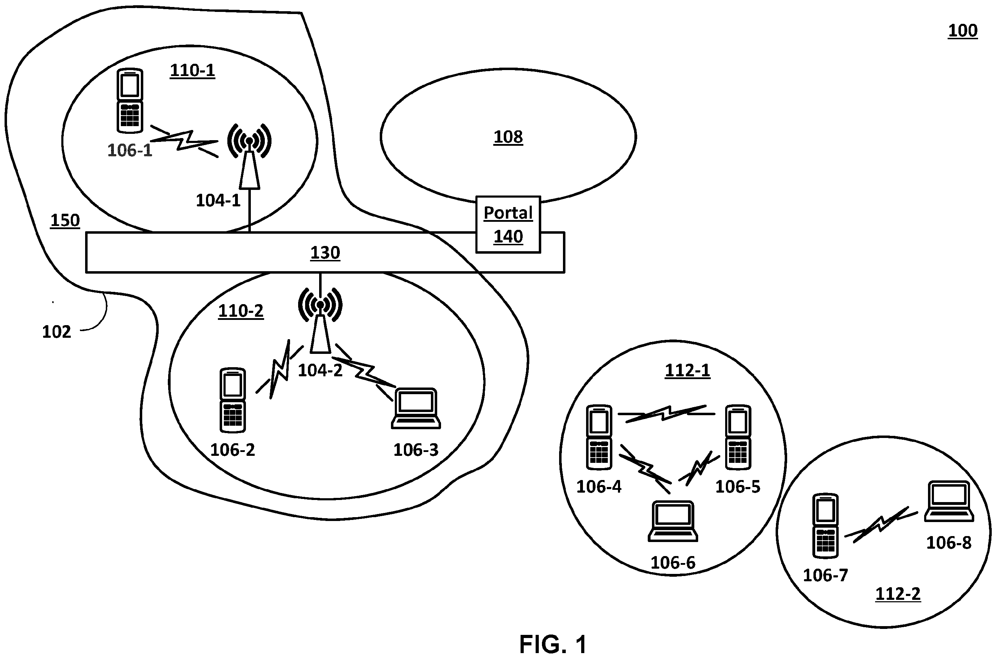

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station) and at least one station (station or non-AP station). For example, BSS 110-1 includes an AP 104-1 and a station 106-1, and BSS 110-2 includes an AP 104-2 and stations 106-2 and 106-3. The AP and the at least one station in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more APs (e.g., APs 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where stations 106-4, 106-5 and 106-6 may be configured to form a first IBSS 112-1 and stations 106-7 and 106-8 may be configured to form a second IBSS 112-2. An ad-hoc network and/or IBSS is a network that includes a plurality of stations without a centralized communication device, such as an AP. The plurality of stations may be configured to communicate without requiring the presence of an AP. For example, the plurality of stations in the IBSS may communicate with each other using peer-to-peer communication (e.g., not via an AP). IBSSs do not include a centralized management entity (e.g., an AP) configured to perform a centralized management. stations within an IBSS are managed in a distributed manner. stations forming an IBSS may be fixed and/or mobile. The stations (e.g., stations 106-4, 106-5, 106-6, 106-7, 106-8) may or may not be permitted to access the DS 130 to constitute a self-contained network.

A station may comprise one or more layers in accordance with the open systems interconnection (OSI) model. For example, stations may comprise a medium access control (MAC) layer that may be in accordance with a defined standard (e.g., an IEEE 802.11 standard, or any other standard). A physical (PHY) layer interface for a radio medium may include the APs and the non-AP stations (stations). The station may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a station. stations may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

A frequency band may include one or more sub-bands or frequency channels. For example, PPDUs conforming to the IEEE 802.11n, 802.1 1ac, 802.11ax and/or 802.11 be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be formed through channel bonding. For example, PPDUs may be sent (e.g., transmitted) over physical channels having bandwidths of 40 MHz, 80 MHz, 160 MHz, or 320 MHz by bonding together multiple 20 MHz channels.

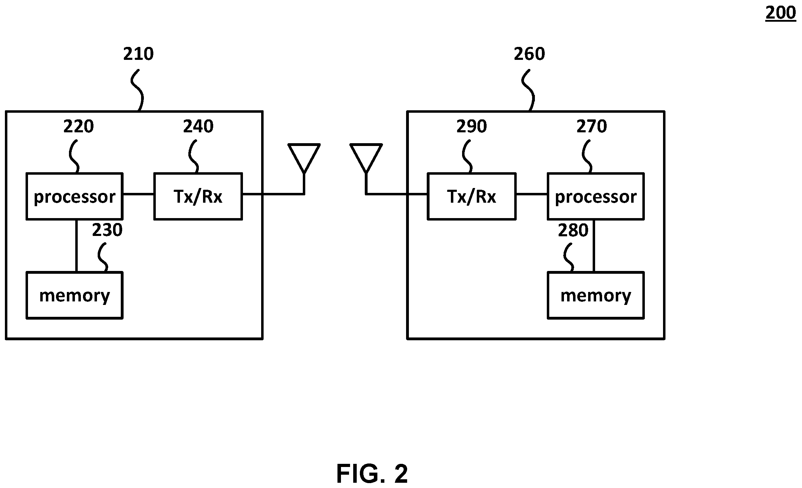

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP station) and the communication device 260 may operate as a station (e.g., a non-AP station). The communication device 210 may operate as a station (e.g., a non-AP station) and the communication device 260 may operate as an AP (e.g., an AP station). Also, or alternatively, the communication device 210 and the communication device 260 may both operate as stations (e.g., a non-AP stations) or may both operate as APs (e.g., AP stations).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.1 The standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the station as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the station as described herein.

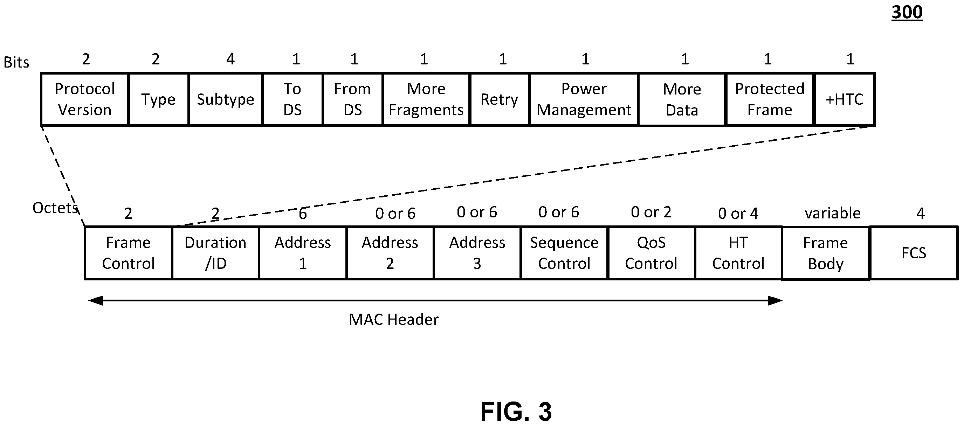

FIG. 3 shows an example format of a MAC frame. In operation, a station may construct a subset of MAC frames for transmission and may decode a subset of received MAC frames upon validation. The particular subsets of frames that a station may construct and/or decode may be determined by the functions supported by the station. A station may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving station may use this indication to aid in the process of eliminating duplicate frames. These rules may not apply for frames sent by a station under a block agreement. The power management subfield may be used to indicate the power management mode of a station.

The More Data subfield may indicate to a station in power save (PS) mode that bufferable units (Bus) are buffered for that station at the AP. The more data subfield may be valid in individually addressed data or management frames sent (e.g., transmitted) by an AP to a station in PS mode. The more data subfield may be set to 1 to indicate that at least one additional buffered BU is present for the station.

The protected frame subfield may be set to 1, for example, if the frame body field contains information that has been processed by a cryptographic encapsulation algorithm. The +HTC subfield may indicate that the MAC frame contains an HT control field.

The duration/ID field of the MAC header may indicate various contents depending on frame type and subtype and the QoS capabilities of the sending station. For example, in control frames of the power save poll (PS-Poll) subtype, the duration/ID field may carry an association identifier (AID) of the station that sent (e.g., transmitted) the frame in the 14 least significant bits (LSB), and the two most significant bits (MSB) may be both set to 1. In other frames sent by stations, the duration/ID field may contain a duration value (in microseconds) which may be used by a recipient to update a network allocation vector (NAV). The NAV may be a counter that indicates to a station an amount of time during which the station must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) station. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

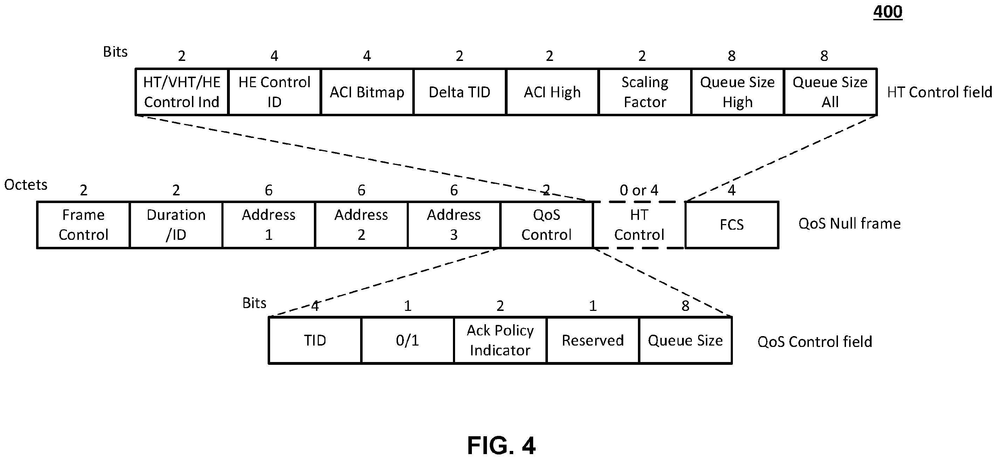

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a station to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the station for transmission to the AP identified by the receiver address of the frame containing the subfield. The queue size subfield may be present in QoS null frames sent by a station, for example, if bit 4 of the QoS control field is set to 1. The AP may use information contained in the queue size subfield to determine the TXOP (transmission opportunity) duration assigned to the station or to determine the uplink (UL) resources assigned to the station.

In a frame sent by or to a non-High Efficiency (non-HE) station, the following rules may apply to the queue size value:
- The queue size value is the approximate total size, rounded up to the nearest multiple of 256 octets and expressed in units of 256 octets, of all MSDUs and A-MSDUs buffered at the station (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE station to an HE AP, the following rules may apply to the queue size value:
- The queue size value, *QS,* is the approximate total size in octets, of all MSDUs and A-MSDUs buffered at the station (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B 15 of the QoS control field and an unscaled value, *UV,* in bits B8-B13 of the QoS control field. The scaling factor subfield provides the scaling factor, *on.*

A station may obtain the queue size, *QS,* from a received QoS control field, which contains a scaling factor, *SF,* and an unscaled value, *UV,* as follows:
*QS* =
16 × *UV,* if *SF* is equal to 0;
1024 + 256 × *UV,* if *SF* is equal to 1;
17408 + 2048 × *UV,* if *SF* is equal to 2;
148480 + 32768 × *UV,* if *SF* is equal to 3 and *UV* is less than 62;
> 2147328, if *SF* equal to is 3 and *UV* is equal to 62;
*Unspecified* or *Unknown,* if *SF* is equal to 3 and *UV* is equal to 63.

The TXOP duration requested subfield, which may be included instead of the queue size subfield, may indicate the duration, in units of 32 microseconds (us), that the sending station determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the station is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the station identified by the receiver address of the frame containing the BSR control subfield. The queue size all subfield may indicate the amount of buffered traffic, in units of SF octets, for all Acs identified by the ACI Bitmap subfield, that is intended for the station identified by the receiver address of the frame containing the BSR control subfield.

The queue size values in the queue size high and queue size all subfields are the total sizes, rounded up to the nearest multiple of SF octets, of all MSDUs and A-MSDUs buffered at the station (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

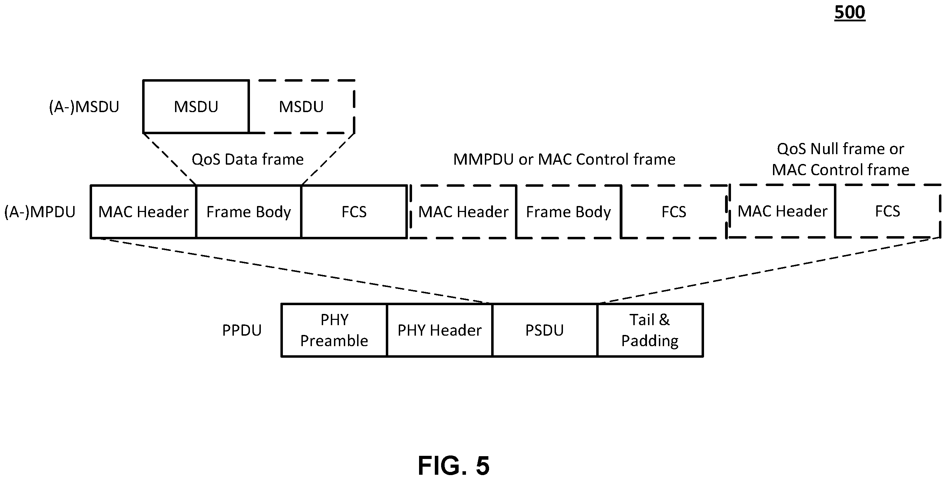

FIG. 5 shows an example format of a PPDU. As shown, the PPDU may comprise a PHY preamble, a PHY header, a PSDU, and tail and padding bits.

The PSDU may comprise one or more MPDUs, such as a QoS data frame, an MMPDU, a MAC control frame, or a QoS null frame. For an MPDU carrying a QoS data frame, the frame body of the MPDU may comprise a MSDU or an A-MSDU. By default, MSDU transport is on a best-effort basis. That is, there is no guarantee that a sent (e.g., transmitted) MSDU will be delivered successfully. The QoS facility may use a traffic identifier (TID) to specify differentiated services on a per-MSDU basis.

A station may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in a UP parameter. An aggregate MPDU (A-MPDU) may comprise MPDUs with different TID values.

A station may deliver buffer status reports (BSRs) to assist an AP in allocating UL MU resources. The station may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may comprise a queue size value for a given TID. The buffer status reported in the BSR control field may comprise an ACI bitmap, delta TID, a high priority AC, and two queue sizes. A station may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below.

The station may report the queue size for a given TID in the queue size subfield of the QoS control field of sent (e.g., transmitted) QoS data frames or QoS null frames; the station may set the queue size subfield to 255 to indicate an unknown/unspecified queue size for that TID. The station may aggregate multiple QoS data frames or QoS null frames in an A-MPDU to report the queue size for different TIDs.

The station may report buffer status in the BSR control subfield of sent (e.g., transmitted) frames if the AP has indicated its support for receiving the BSR control subfield. A High-Efficiency (HE) station may report the queue size for a preferred AC, indicated by the ACI high subfield, in the queue size high subfield of the BSR control subfield. The station may set the queue size high subfield to 255 to indicate an unknown/unspecified queue size for that AC. A HE station may report the queue size for ACs indicated by the ACI bitmap subfield in the queue size all subfield of the BSR control subfield. The station may set the queue size all subfield to 255 to indicate an unknown/unspecified BSR for those ACs.

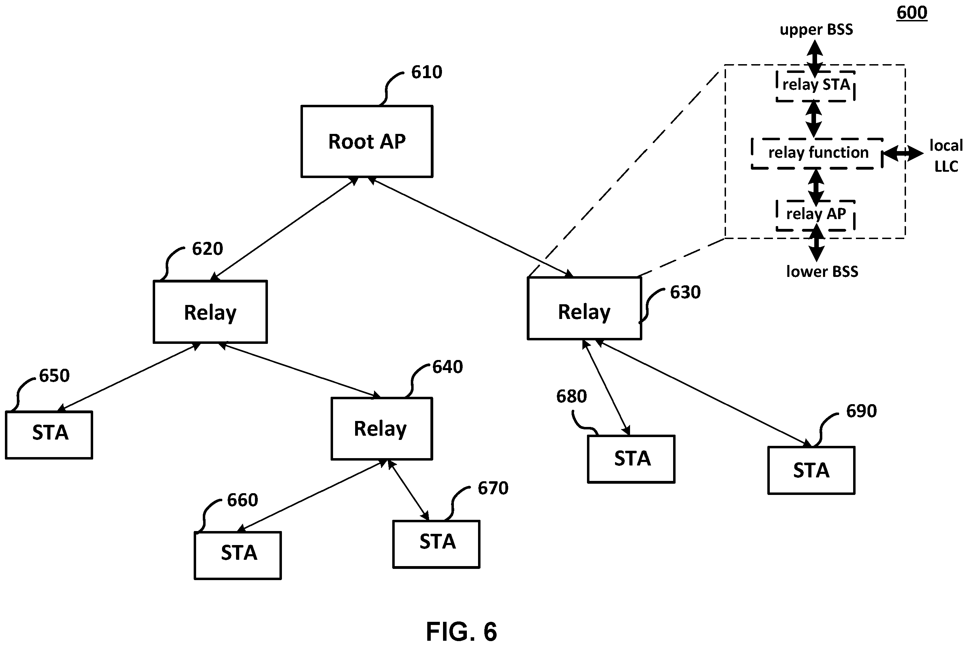

FIG. 6 shows an example 600 of a sub-1 GHz (S1G) relay architecture. Example S1G relay architecture 600 may be an example according to the S1G relay operation, such as defined in section 10.54.1 of the IEEE 802.11 standard draft "IEEE P802.11-REVme^{™}/D2.1, January 2023," or any other technical specification, standard, and/or release. Example S1G relay architecture 600, as shown in FIG. 6, may include a root AP 610, relays 620, 630 and 640, and stations 650, 660, 670, 680 and 690.

S1G relay may be a mechanism for expanding the coverage area of an AP, referred to as the root AP. The S1G relay mechanism, In example S1G relay architecture 600, may be being used to expand the coverage area of root AP 610.

S1G relays 620, 630 and 640, as shown in FIG. 6, may each comprise a relay AP, a relay station, and a relay function. The relay station communicates with an upper BSS, whereas the relay AP communicates with a lower BSS. The relay function may perform local reception or selective forwarding of MSDUs between the relay station and the relay AP, based on destination address. Relays 620 and 630 may be associated with root AP 610. Relay 640 may be associated with relay 620. Station 650 may be associated with relay 620. Stations 660 and 670 may be associated with relay 640. Stations 680 and 690 may be associated with relay 630.

Frames from station 650 may be forwarded via the relay function of relay 620 (from the relay AP to the relay station of relay 620) to root AP 610. Frames from root AP 610, in the reverse direction, may be forwarded to station 650 via the relay function of relay 620 (from the relay station to the relay AP of relay 620). Stations 680 and 690 may similarly communicate with root AP 610 via relay 630 in both directions (e.g., uplink and downlink). Stations 660 and 670 may use relays 640 and 620 consecutively to communicate with root AP 610.

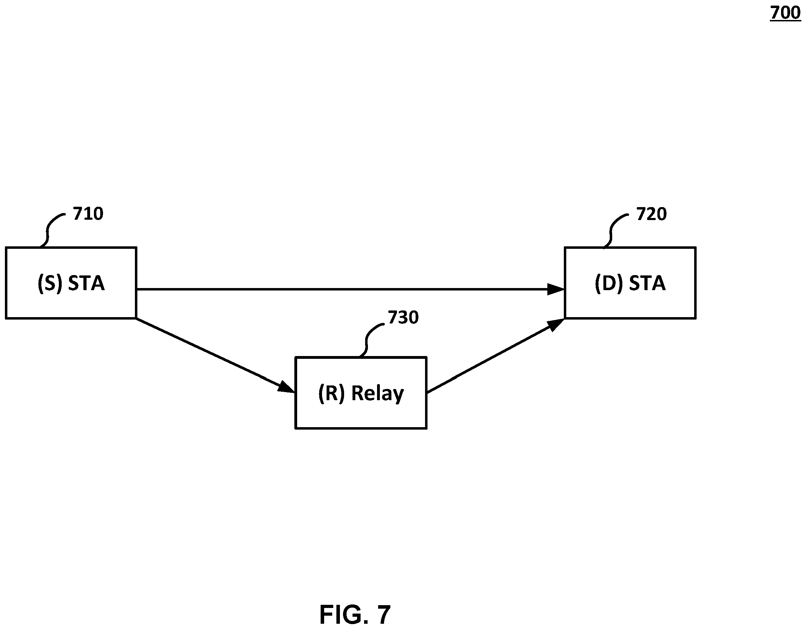

FIG. 7 shows an example 700 of a source-relay-destination link. Source-relay-destination link 700, as shown in FIG. 7, may comprise a station 710 as a source station, a station 720 as a destination station, and a relay 730.

Station 710 may be a non-AP station or an AP station. Station 720 may similarly be a non-AP station or an AP station. Relay 730 may comprise a relay AP, a relay station, and a relay function as described in FIG. 7 above. Station 710 may be an AP station and station 720 may be a non-AP station, or vice versa. Stations 710 and 720 both may be AP stations or non-AP stations. Stations 710 and 720 may communicate directly.

Source station 710 may use relay 730 to communicate with a destination station 720, due to unreliable communication or to extend the range of at least some communication. Station 710 may send (e.g., transmit) data frames destined to station 720 via relay 730. Source station 710 and/or the relay 730 may choose to protect the sent (e.g., transmitted) data frames with TXOP protection. Source station 710 and/or the relay 730 may choose to protect the sent (e.g., transmitted) data frames with TXOP protection, for example, if relaying the data frames via relay 730. Source station 710 and/or relay 730 may choose not to protect the data frames with TXOP protection. Source station 710 and/or relay 730 may choose not to protect the data frames with TXOP protection, for example, if relaying the data frames via relay 730.

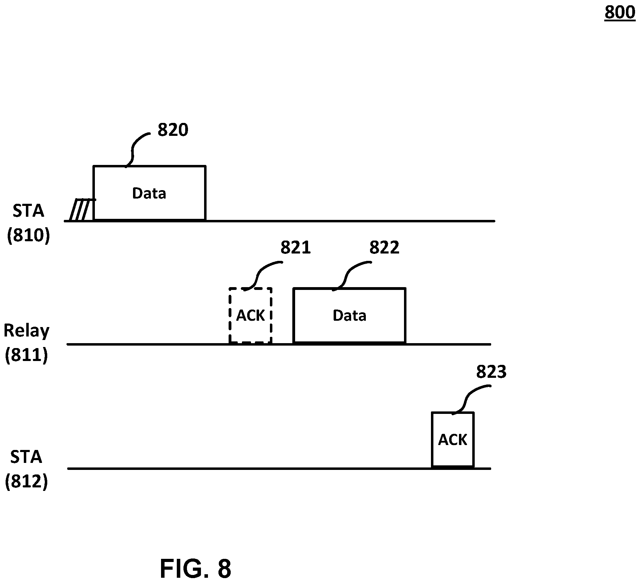

FIG. 8 shows an example 800 that shows relaying with no transmission opportunity (TXOP) protection. Example 800 may be an example according to the TXOP sharing procedures for S1G relay operation as defined in section 10.54.5 of the IEEE 802.11 standard draft "IEEE P802.11-REVme^{™}/D2.1, January 2023." Example 800, as shown in FIG. 8, may include stations 810 and 812 and relay 811.

Station 810, in example 800, may be a station that supports TXOP sharing procedures. Station 810, as shown in FIG. 8, may send (e.g., transmit) a data frame 820 destined to station 812 via relay 811. Data frame 820 may be a protocol version 1 (PV1) QoS data frame. Station 810 may set a Relayed Frame field in a Frame Control field of data frame 820 to 1. The Relayed Frame field set to 1 indicates a relay-shared TXOP. On receiving data frame 820 with the Relay Frame field set to 1, relay 811 may send (e.g., transmit) an ACK frame 821 if an explicit ACK procedure is used. Relay 811 may not send (e.g., transmit) an ACK frame if an implicit ACK procedure is used.

Relay 811, in example 800, may send (e.g., transmit) data frame 822 to station 812 without protecting data frame 822. Station 812 may send (e.g., transmit) an ACK frame 823 after receiving data frame 822 from relay 811. Relaying without TXOP protection may allow a lower latency transmission of data frame 820 from station 810 to station 812. Communication may be less reliable in case that other stations of the same BSS may be present within the communication ranges of stations 810, 812 and relay 811. To improve communication reliability, an RTS/CTS procedure may be used to protect relayed data frames as further described below.

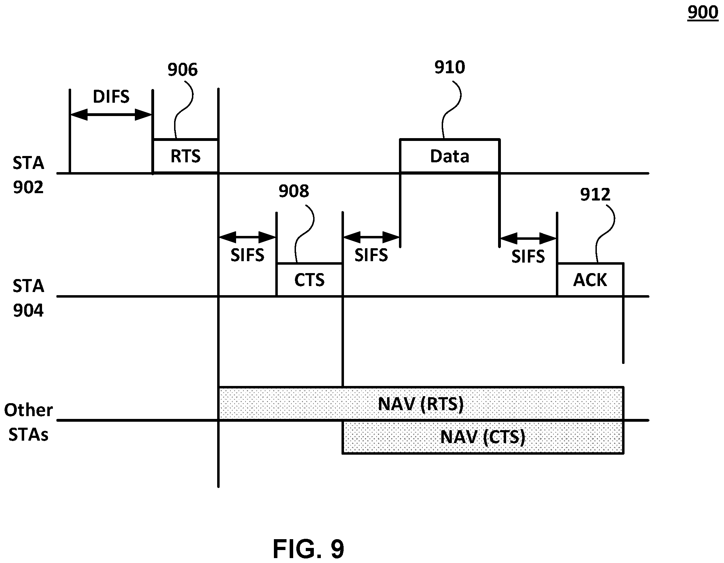

FIG. 9 shows an example 900 of a Request-to-Send (RTS)/Clear-to-Send (CTS) procedure. Example RTS/CTS procedure 900 may be an example according to the RTS/CTS procedure as defined in section 10.3.2.9 of the IEEE 802.11 standard draft "IEEE P802.11-REVme^{™}/D2.1, January 2023." Example RTS/CTS procedure 900, as shown in FIG. 9, may include stations 902 and 904. Other stations of the same BSS may also be within communication range of stations 902 and 904.

Station 902 may send (e.g., transmit) an RTS frame 906 to station 904. station 902 may send (e.g., transmit) RTS frame 906 to protect from hidden station(s) the transmission of a data frame 910 that station 902 intends to send (e.g., transmit). RTS frame 906 may include a Duration/ID field. The Duration/ID field may be set to the time, in microseconds, required to send (e.g., transmit) data frame 910, plus one CTS frame, plus one ACK frame (if required), plus three SIFS (Short Interframe Spacing) periods.

Station 904 may respond to RTS frame 906 by sending (e.g., transmitting) a CTS frame 908 to station 902. CTS frame 908 may be sent (e.g., transmitted) one SIFS period after RTS frame 906. Station 904 may respond to RTS frame 906. Station 904 may respond to RTS frame 906, for example, if RTS frame 906 is addressed to station 904 and after considering the NAV, unless the NAV was set by a frame originating from station 902. Station 904 may respond to the RTS frame 906. Station 904 may respond to the RTS frame 906, for example, if RTS frame 906 is addressed to station 904 and if the NAV indicates idle. The NAV, for a non-S1G station, may indicate idle. The NAV, for a non-S1G station, may indicate idle, for example, if the NAV count is 0 or if the NAV count is non-zero but a nonbandwidth signaling TA obtained from a TA field of RTS frame 906 matches a saved TXOP holder address. The NAV, for an S1G station, may indicate idle. The NAV, for an S1G station, may indicate idle if both the NAV and RID (response indication deferral) counters are 0 or if either the NAV or RID counter is non-zero but the TA field of RTS frame 906 matches the saved TXOP holder address.

Station 904 may set an RA field of CTS frame 908 to a nonbandwidth signaling TA obtained from the TA field of RTS frame 906. Station 904 may set a Duration field of CTS frame 908 based on the Duration/ID field of RTS frame 906, namely as equal to the value of the Duration/ID field of RTS frame 906, adjusted by subtracting the time required to send (e.g., transmit) CTS frame 908 and one SIFS period.

Station 902, upon receiving CTS frame 908, may wait one SIFS period before sending (e.g., transmitting) data frame 910. Station 904 may send (e.g., transmit) an ACK frame 912 in response to data frame 910. Station 904 may send (e.g., transmit) ACK frame 912 one SIFS after receiving data frame 910.

Other stations within communication range of stations 902 and 904, and belonging to the same BSS as shown in example 900, may set their NAVs according to RTS frame 906 and/or CTS frame 908. For example, a station receiving RTS frame 906 may set its NAV based on the Duration/ID field of RTS frame 906. Another station receiving CTS frame 908 may set its NAV based on the Duration field of CTS frame 908. The other stations may not access the channel using EDCA until the end of transmission of ACK frame 912.

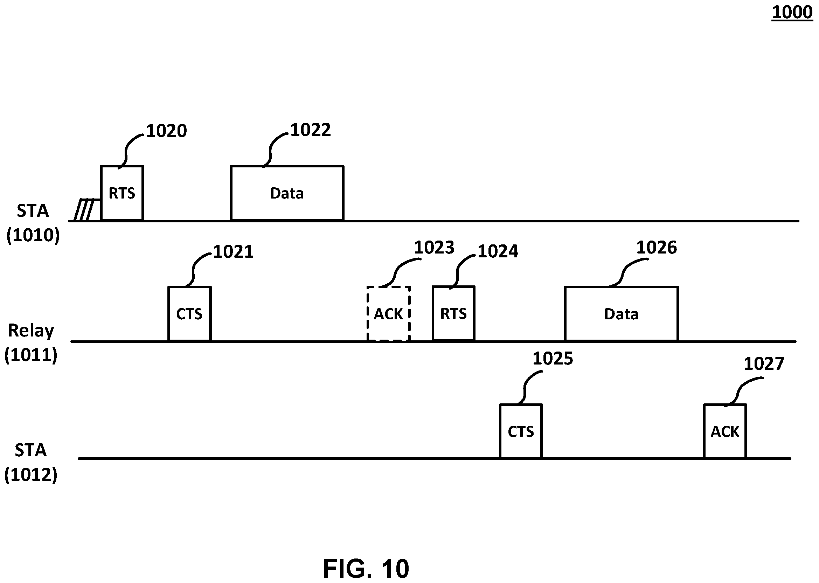

FIG. 10 shows an example 1000 that shows relaying with TXOP protection. Example 1000 may be an example according to the TXOP sharing procedures for S1G relay operation as defined in section 10.54.5 of the IEEE 802.11 standard draft "IEEE P802.11-REVme^{™}/D2.1, January 2023." Example 1000, as shown in FIG. 10, may include stations 1010 and 1012 and relay 1011.

Station 1010 may be a station that supports TXOP sharing procedures. Station 1010 may send (e.g., transmit) an RTS frame 1020 to relay 1011 before sending (e.g., transmitting) a data frame 1022 to relay 1011. Relay 1011 may respond to RTS frame 1020 by sending (e.g., transmitting) a CTS frame 1021 to station 1010, if its NAV indicates idle. Station 1010, upon receiving CTS frame 1021, may send (e.g., transmit) data frame 1022 to relay 1011. Relay 1011 may send (e.g., transmit) an ACK frame 1023 if an explicit ACK procedure is used. Relay 1011 may not send (e.g., transmit) an ACK frame if an implicit ACK procedure is used.

Relay 1011 may send (e.g., transmit) an RTS frame 1024 to station 1012, before relaying receive data frame 1022 onto station 1012. Station 1012 may respond to RTS frame 1024 by sending (e.g., transmitting) a CTS frame 1025 to relay 1011, if its NAV indicates idle. Relay 1011, upon receiving CTS frame 1025, may send (e.g., transmit) a data frame 1026 (relay of data frame 1022) to station 1012. Station 1012 may send (e.g., transmit) an ACK frame 1027 to relay 1011 after receiving data frame 1026.

Relaying with TXOP protection provides a more reliable approach to send (e.g., transmit) data frames from a source station to a destination station. This may be achieved by using the RTS/CTS procedure sequentially in source-to-relay and relay-to-destination links. There may be a delay until the relay receives a CTS frame from the destination station and can send (e.g., transmit) the data frame to the destination station, where the relay-to-destination link is not available due to a busy medium. An end-to-end approach that provides TXOP protection for both links may thus be more suitable to prevent any such delays.

A triggered TXOP sharing (TXS) procedure, in at least some Wi-Fi standard, may allow an AP to allocate a portion of the time within an obtained TXOP to a station for sending (e.g., transmitting) one or more non-trigger-based (non-TB) PPDUs. The AP, for the triggered TXOP sharing procedure, may send (e.g., transmit) a multi-user request-to-send (MU-RTS) trigger frame with a triggered TXOP sharing mode subfield set to a non-zero value. The MU-RTS trigger frame may be a trigger frame for triggering CTS frame(s) from multiple users.

An MU-RTS TXS (triggered TXOP sharing) trigger (MRTT) frame is a MU-RTS trigger frame with a triggered TXOP sharing mode subfield set to a non-zero value (e.g., 1 or 2). The station, during the portion of the allocated time, may send (e.g., transmit) the one or more non-TB PPDUs to the AP. A triggered TXOP sharing mode subfield in an MU-RTS TXS trigger frame may be set to 1.

The station, during the portion of the allocated time, may send (e.g., transmit) the one or more non-TB PPDUs to the AP or a peer station. The peer station may be a station with a connection for peer-to-peer (P2P) communication or direct communication with the station. A triggered TXOP sharing mode subfield in an MU-RTS TXS trigger frame may be set to 2. The direct wireless link may be established according to the tunneled direct link setup (TDLS) protocol.

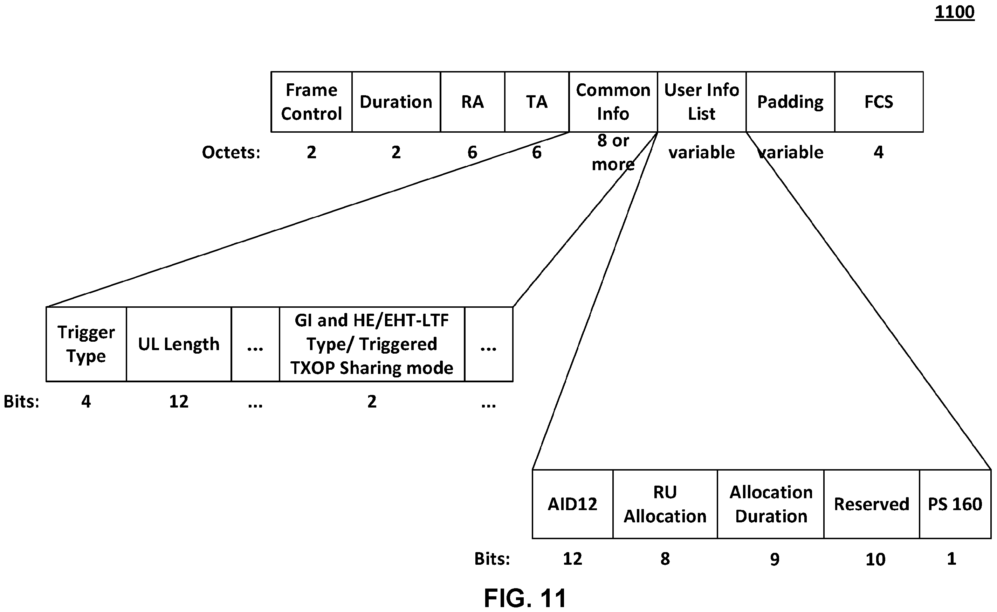

FIG. 11 shows an example 1100 of an MU-RTS trigger frame which may be used in a TXS procedure. The MU-RTS trigger frame may comprise a frame control field, a duration field, a receiver address (RA) field, a transmitter address (TA) field, a common info field, a user info list field, a padding field, and/or frame check sequence (FCS) field. The common info field may be a high-efficiency (HE) variant common info field, an extremely high throughput (EHT) variant common info field, or an ultra high reliability (UHR) variant common info field.

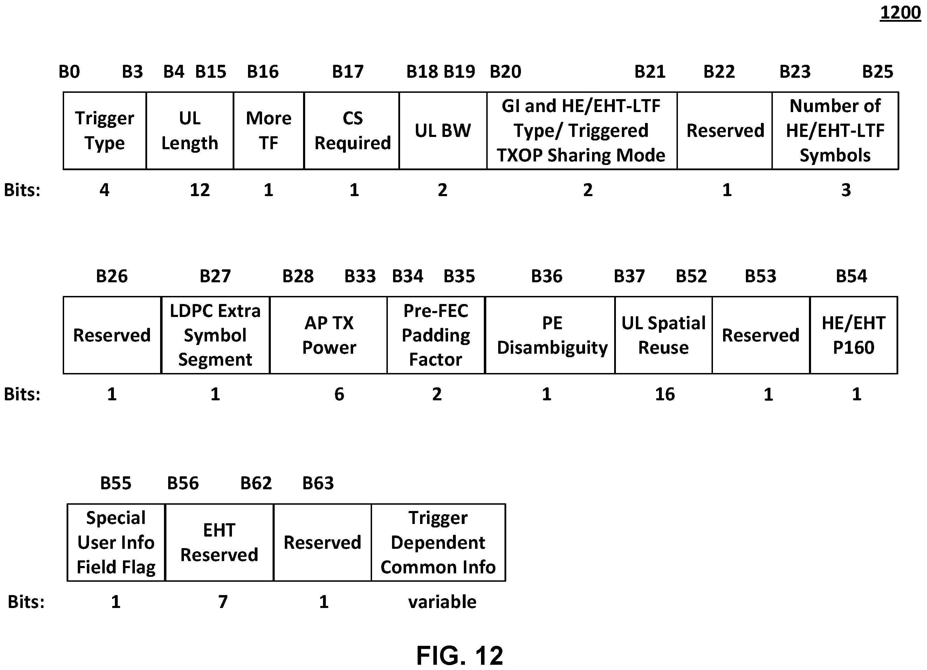

An EHT variant common info field may comprise one or more of the following subfields: trigger type, UL length, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P160, special user info field flag, EHT reserved, reserved, or trigger dependent common info. The subfields of the EHT variant common info field will be presented in more detail in FIG. 12.

An EHT variant user info field may comprise one or more of the following subfields: AID12, RU allocation, allocation duration, reserved, or PS160. The AID12 subfield of the MU-RTS trigger frame may indicate an association identifier (AID) of a station that may use a time indicated by an allocation duration subfield of the MU-RTS trigger frame. The RU allocation subfield of the MU-RTS trigger frame may indicate the location and size of the RU allocated for a station indicated by an AID12 subfield, which is used together with the PS160 subfield.

The allocation duration subfield may include an allocation duration subfield (e.g., if/when the triggered TXOP sharing mode subfield is set to a non-zero value). The allocation duration subfield may indicate a time allocated by an AP sending (e.g., transmitting) the MU-RTS trigger frame. The allocated time may be a portion of the time of an obtained TXOP by the AP. The allocation duration subfield may indicate a first time period.

FIG. 12 shows an example 1200 of a common info field of an MRTT frame which may be used in a TXS procedure according to an embodiment. The MRTT frame may be sent (e.g., transmitted) by an AP to associated stations.

An EHT variant common info field may comprise one or more of the following subfields: trigger type, UL length, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P160, special user info field flag, EHT reserved, reserved, or trigger dependent common info. The trigger type subfield may indicate an MU-RTS trigger frame.

The GI and HE/EHT-LTF Type/Triggered TXOP sharing mode subfield may include a triggered TXOP sharing mode subfield (e.g., when the trigger type subfield indicates an MU-RTS trigger frame). The triggered TXOP sharing mode subfield may be set to a non-zero value (e.g., 1 or 2).

The triggered TXOP sharing mode subfield may indicate that a station indicated by an AID12 subfield (of the user info list field) of the MU-RTS trigger frame may send (e.g., transmit) one or more non-TB PPDUs to the AP during the time indicated by the allocation duration subfield. The triggered TXOP sharing mode subfield may be set to 1.

The triggered TXOP sharing mode subfield may indicate that a station indicated by an AID12 subfield of the MU-RTS trigger frame may send (e.g., transmit) one or more non-TB PPDUs to the AP or to a peer station during the time indicated by the allocation duration subfield. The peer station may be a station with a connection for P2P communication or direct communication with the station. The triggered TXOP sharing mode subfield may be set to 2.

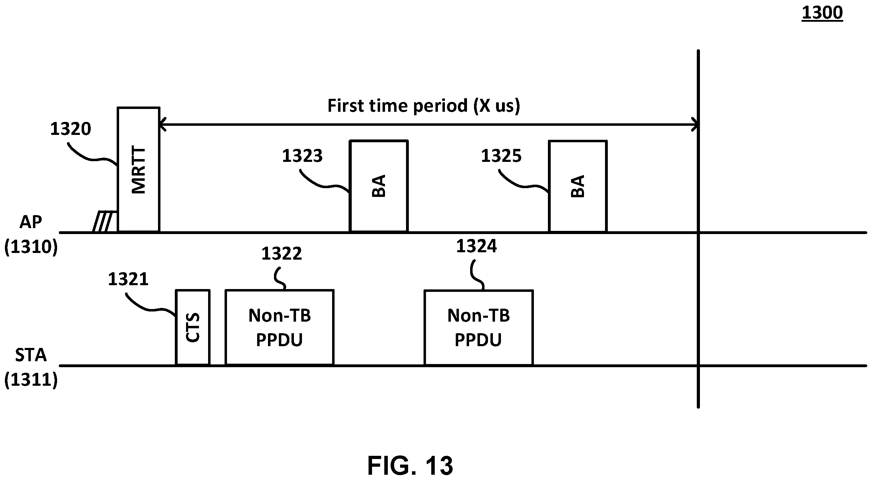

FIG. 13 shows an example 1300 of a TXS procedure (Mode =1). The procedure, as shown in FIG. 13, may begin by an AP 1310 sending (e.g., transmitting) an MU-RTS TXS trigger (MRTT) frame 1320 to a station 1311. MRTT frame 1320 may allocate a portion of an obtained TXOP to station 1311 and may indicate a triggered TXOP sharing mode equal to 1. Station 1311 receiving MRTT 1320 may use the allocated time duration to send (e.g., transmit) one or more non-TB PPDUs 1322, 1324 to AP 1310.

MRTT frame 1320 may comprise a triggered TXOP sharing mode subfield and/or a first time period. The first time period may indicate a portion of a time allocated by AP 1310 within an obtained TXOP. The first time period may be indicated by a subfield in MRTT frame 1320. The first time period may be set to a value of X microseconds (us).

The triggered TXOP sharing mode subfield may be set to 1. The triggered TXOP sharing mode subfield set to 1 may indicate that station 1311 may send (e.g., transmit) one or more non-TB PPDUs to AP 1310 during the first time period. The one or more non-TB PPDUs may comprise a data frame, a control frame, a management frame, or an action frame.

MRTT frame 1320, as shown in FIG. 13, may define a first time period of X us. Station 1311 may send (e.g., transmit) non-TB PPDUs 1322, 1324 comprising one or more data frame to AP 1310 during the first time period, preceded by a CTS frame 1321. AP 1310 may send (e.g., transmit) one or more Block Ack (BA) frames 1323, 1325. AP 1310 may send (e.g., transmit) one or more Block Ack (BA) frames 1323, 1325, for example, based on (e.g., in response to) the one or more data frames contained in non-TB PPDUs 1322, 1324 received from station 1311.

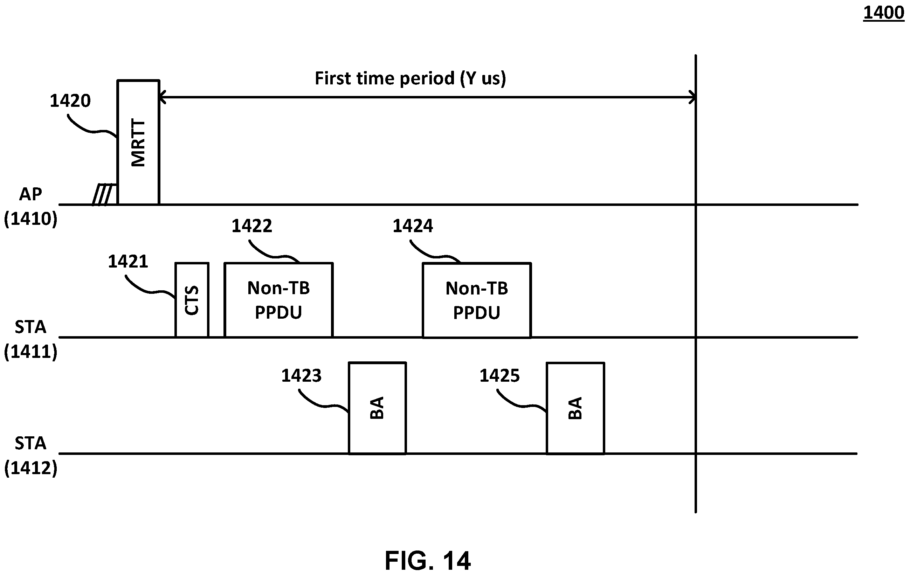

FIG. 14 shows an example 1400 of a TXS procedure (Mode =2). The procedure, as shown in FIG. 14, may begin by an AP 1410 sending (e.g., transmitting) an MRTT frame 1420 to a station 1411. MRTT frame 1420 may allocate a portion of an obtained TXOP to station 1411 and may indicate a triggered TXOP sharing mode equal to 2. Station 1411 receiving MRTT 1420 may use the allocated time duration to send (e.g., transmit) one or more non-TB PPDUs 1422, 1424 to station 1412.

MRTT frame 1420 may comprise a triggered TXOP sharing mode subfield and/or a first time period. The first time period may indicate a portion of a time allocated by AP 1410 within an obtained TXOP. The first time period may be indicated by a subfield in MRTT frame 1420. The first time period may be set to a value of Y us.

The triggered TXOP sharing mode subfield may be set to 2. The triggered TXOP sharing mode subfield set to 2 may indicate that station 1411 may send (e.g., transmit) one or more non-TB PPDUs to AP 1410 or to a peer station during the first time period. The peer station may be a station with a connection for P2P communication or direct communication with station 1411. The one or more non-TB PPDUs may comprise a data frame, a control frame, a management frame, or an action frame.

MRTT frame 1420, as shown in FIG. 14, may define a first time period of Y us. Station 1411 may send (e.g., transmit) non-TB PPDUs 1422, 1424 comprising one or more data frame to station 1412 during the first time period, preceded by a CTS frame 1421. Station 1412 may send (e.g., transmit) one or more Block Ack (BA) frames 1423, 1425. Station 1412 may send (e.g., transmit) one or more Block Ack (BA) frames 1423, 1425, for example (e.g., in response to) the one or more data frames contained in non-TB PPDUs 1422, 1424 received from the station 1411.

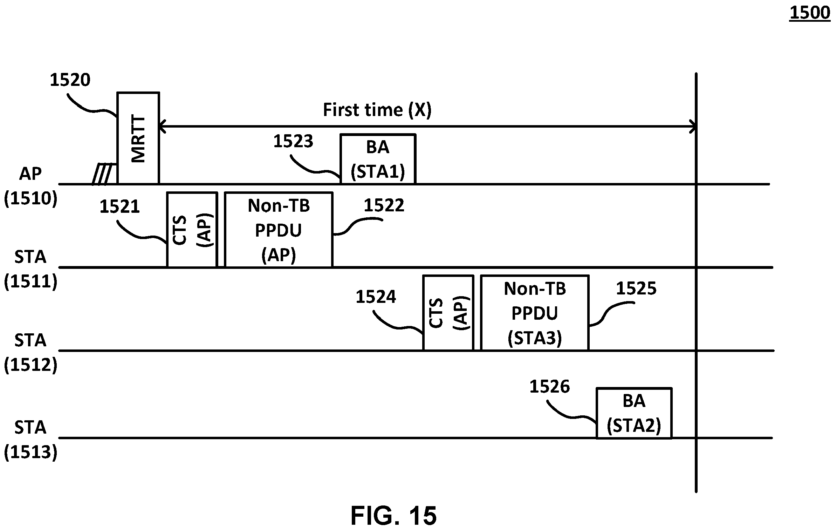

FIG. 15 shows an example 1500 of a TXS procedure for allocating time within an obtained TXOP to multiple stations, with a respective triggered TXOP sharing mode indicated per station. Example 1500 may include an AP 1510 and a plurality of stations 1511, 1512, and 1513. Stations 1511 and 1512 may be associated with AP 1510. Stations 1511 and 1512 may be associated with AP 1510, if (e.g., while) station 1513 may not be associated with AP 1510.

As shown in FIG. 15, the procedure may begin by AP 1510 sending (e.g., transmitting) MRTT frame 1520. MRTT frame 1520 may allocate a time portion of an obtained TXOP to stations 1511 and 1512 respectively. MRTT frame 1520 may indicate a respective triggered TXOP sharing mode for each of stations 1511 and 1512.

MRTT frame 1520 may comprise a common info field. RTT frame 1520 may comprise a plurality of user info fields corresponding to a plurality of stations, including stations 1511 and 1512.

The plurality of user info fields may each include a triggered TXOP sharing mode subfield. A triggered TXOP sharing mode subfield of a user info field may indicate a TXS operation mode of a respective station. The respective station may be indicated by an AID12 subfield of the user info field.

A triggered TXOP sharing mode subfield of a user info field corresponding to station 1511 may be set to 1 to indicate a Triggered TXOP sharing mode 1 for station 1511. A triggered TXOP sharing mode subfield of a user info field corresponding to station 1511 may be set to 1 to indicate a Triggered TXOP sharing mode 1 for station 1511, for example, if (e.g., while) a triggered TXOP sharing mode subfield of a user info field corresponding to station 1512 may be set to 2 to indicate a Triggered TXOP sharing mode 2 for station 1512.

The indication of a triggered TXOP sharing mode 1 for a station in an MU-RTS TXS trigger frame may indicate that the station may send (e.g., transmit) a non-TB PPDU to an AP sending (e.g., transmitting) the MU-RTS TXS trigger frame, in a time allocation for the station. The station, for which the triggered TXOP sharing mode is indicated in the MU-RTS TXS trigger frame, may be indicated by an AID12 subfield of a user info field of the MU-RTS TXS trigger frame.

The indication of a triggered TXOP sharing mode 2 for a station in an MU-RTS TXS trigger frame may indicate that the station may send (e.g., transmit) a non-TB PPDU to an AP sending (e.g., transmitting) the MU-RTS TXS trigger frame or to another station, in a time allocation for the station. The station, for which the triggered TXOP sharing mode is indicated in the MU-RTS TXS trigger frame, may be indicated by an AID12 subfield of a user info field of the MU-RT S trigger frame. The other station may be a peer station that has a direct connection with the station indicated by the AID12 subfield.

Station 1511, in example 1500, may send (e.g., transmit) a CTS frame 1521, followed by a non-TB PPDU 1522, in a respective time allocation for station 1511. Station 1511, in example 1500, may send (e.g., transmit) a CTS frame 1521, followed by a non-TB PPDU 1522, in a respective time allocation for station 1511, for example, based on (e.g., in response to) MRTT frame 1520. Station 1512 may similarly send (e.g., transmit) a CTS frame 1524, followed by a non-TB PPDU 1525, in a respective time allocation for station 1512.

Station 1511 may send (e.g., transmit) non-TB PPDU 1522 to AP 1510 based on a triggered TXOP sharing mode subfield, of a user info field corresponding to station 1511, being set to 1. Station 1511 may receive a Block Ack (BA) frame 1523. Station 1511 may receive a Block Ack (BA) frame 1523, for example, based on (e.g., in response to) non-TB PPDU 1522, from AP 1510.

Station 1512 may send (e.g., transmit) non-TB PPDU 1525 to station 1513 based on a triggered TXOP sharing mode subfield, of a user info field corresponding to station 1512, being set to 2. Station 1512 may receive a Block Ack (BA) frame 1526. Station 1512 may receive a BA frame 1526, for example, based on (e.g., in response to) non-TB PPDU 1525, from station 1513.

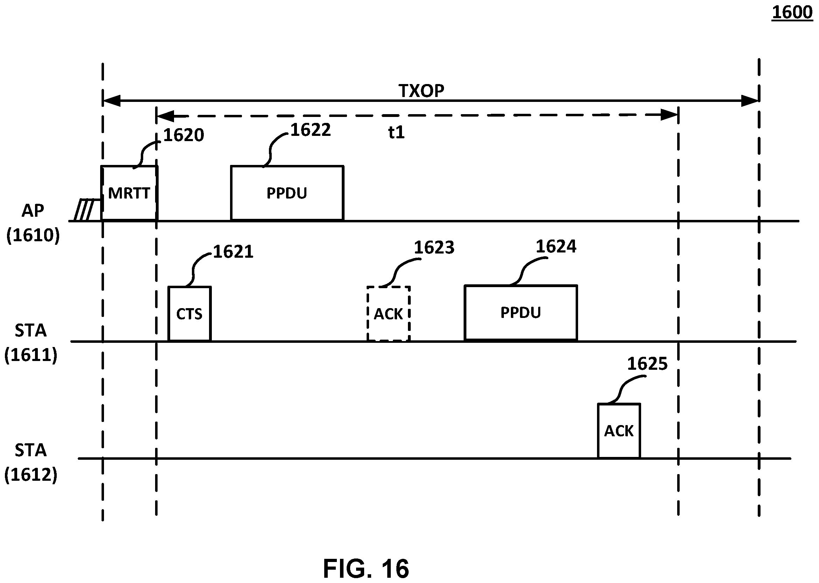

Allocating a time portion of an obtained TXOP to stations 1511 and 1512, observed from example 1500, may not be adequate to guarantee end-to-end TXOP protection for a relay operation. Station 1512 may send (e.g., transmit) a non-TB PPDU to any station it has buffered traffic to, instead of to a predetermined relay or a destination station. Station 1512 may send (e.g., transmit) a non-TB PPDU to any station it has buffered traffic to, instead of to a predetermined relay or a destination station, for example, if a TXS mode subfield of a user info field corresponding to station 1512 is set to 2. Hence, the procedure shown in example 1500 may not be used for a relaying procedure. A multi-user TXS procedure, as further described below, may be used to enable TXS-based relaying procedures. Examples of such TXS-based relaying procedures are described hereinafter in FIGs. 16-23, 27-28.

FIG. 16 shows an example 1600 of a TXS-based relaying procedure, which may be used for relaying downlink traffic from an AP to a station. Example 1600, as shown, may include an AP 1610 and a plurality of stations 1611 and 1612. Stations 1611 and 1612 may be associated with AP 1610. AP 1610 and stations 1611 and 1612 may be within communication range of each other. Station 1611 may receive data frames from AP 1610 destined to itself. Station 1611 may serve as a relay for station 1612. AP 1610 may prefer to send (e.g., transmit) a PPDU to station 1612 via station 1611 in order to increase the throughput in a downlink transmission. AP 1610 may prefer to receive a PPDU from station 1612 via station 1611 in order to increase the throughput in an uplink transmission.

As shown in FIG. 16, the TXS-based relaying procedure may begin by AP 1610 sending (e.g., transmitting) an MRTT frame 1620. MRTT frame 1620 may allocate a time portion of an obtained TXOP to station 1611. MRTT frame 1620 may indicate a triggered TXOP sharing mode for station 1611. The triggered TXOP sharing mode may be set to 3. The triggered TXOP sharing mode being equal to 3 may indicate to station 1611 that the allocated time portion is to be used for a relaying operation.

MRTT frame 1620 may comprise a common info field. The common info field may comprise the triggered TXOP sharing mode.

MRTT frame 1620 may comprise a user info field corresponding to station 1611. Station 1611 may be indicated by an AID12 subfield of the user info field. The whole duration of the relaying operation may be indicated in an allocation duration field of the user info field.

The indication of a triggered TXOP sharing mode 3 for a station in an MU-RTS TXS trigger frame may indicate that the station may serve as a relay between the AP and another station. Station 1611 may send (e.g., transmit) a CTS frame and may receive a PPDU from the AP to be sent (e.g., transmitted) to station 1612. Station 1611 may send (e.g., transmit) a CTS frame and may receive a PPDU from the AP to be sent (e.g., transmitted) to station 1612, for example, based on (e.g., after) receiving the MRTT frame, where the TXS mode is 3 and station 1611 is indicated by an AID12 subfield of the user info field. The address of a destination station, for example station 1612, may be indicated in the PHY header or MAC header of the PPDU. Station 1611 may act as a relay for downlink transmission.

Station 1611, in example 1600, may send (e.g., transmit) a CTS frame 1621. Station 1611, in example 1600, may send (e.g., transmit) a CTS frame 1621, for example, based on (e.g., in response to) MRTT frame 1620. AP 1610 may send (e.g., transmit) a PPDU 1622 to station 1611. AP 1610 may send (e.g., transmit) a PPDU 1622 to station 1611, for example, based on receiving CTS frame 1621. Station 1611 may send (e.g., transmit) an ACK frame 1623 to AP 1610, upon receiving PPDU 1622. Station 1611 may not send (e.g., transmit) an ACK frame if an implicit ACK procedure is used. Station 1611 may send (e.g., transmit) a PPDU 1624 to station 1612. PPDU 1624 may be based on PPDU 1622. The data payload of PPDU 1624 may be the same as the data payload of PPDU 1622. Station 1611 may receive an ACK frame 1625 from station 1612. Station 1611 may receive an ACK frame 1625 from station 1612, for example, based on (e.g., in response to) PPDU 1624. ACK frames 1623 and 1625 may be block ACK (BA) frames.

The time portion of the TXOP, as shown in FIG. 16, allocated to station 1611 may correspond to the end-to-end duration of the relaying operation. Station 1611 may use the allocated time portion to receive PPDU 1622 from AP 1610 and to send (e.g., transmit) PPDU 1624 to station 1612. The TXS-based relaying procedure of FIG. 16 may only be used for a two-hop relaying operation (i.e., with a single relay node in the end-to-end path) and may not be used for relaying operations with greater than two hops (i.e., with more than one relay node in the end-to-end path). The TXS-based relaying procedure of FIG. 16 may only be used for a two-hop relaying operation (i.e., with a single relay node in the end-to-end path) and may not be used for relaying operations with greater than two hops (i.e., with more than one relay node in the end-to-end path), for example, if MRTT frame 1620 allocates only station 1611.

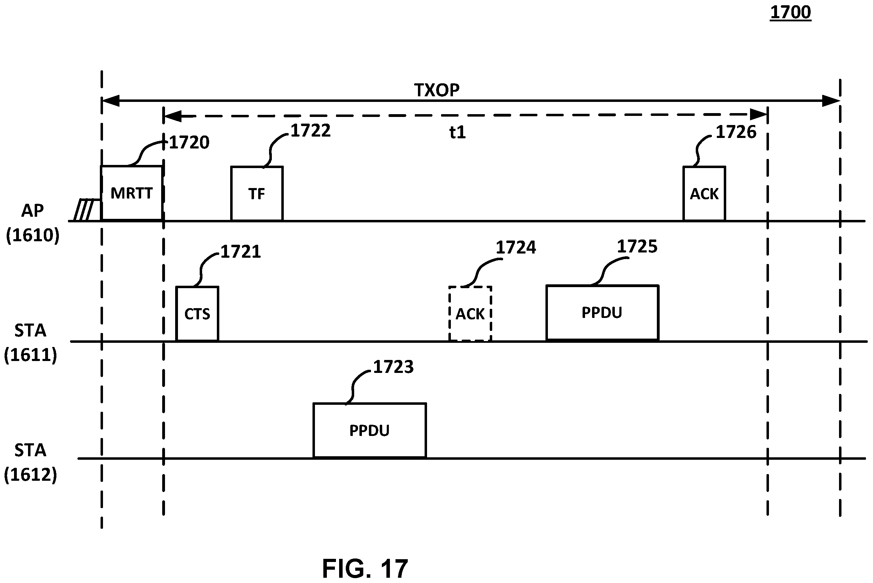

FIG. 17 shows an example 1700 of a TXS-based relaying procedure, which may be used for relaying uplink traffic from a station to an AP. Example 1700 may include an AP 1610 and a plurality of stations 1611 and 1612. Stations 1611 and 1612 may be associated with AP 1610. AP 1610 and stations 1611 and 1612 may be within communication range of each other. Station 1611 may receive data frames from AP 1610 destined to itself. Station 1611 may serve as a relay for station 1612. AP 1610 may prefer to send (e.g., transmit) a PPDU to station 1612 via station 1611 in order to increase the throughput in a downlink transmission. AP 1610 may prefer to receive a PPDU from station 1612 via station 1611 in order to increase the throughput in an uplink transmission.

As shown in FIG. 17, the TXS-based relaying procedure may begin by AP 1610 sending (e.g., transmitting) an MRTT frame 1720. MRTT frame 1720 may allocate a time portion of an obtained TXOP to station 1611. MRTT frame 1720 may indicate a triggered TXOP sharing mode for station 1611. The triggered TXOP sharing mode may be set to 3. The triggered TXOP sharing mode being equal to 3 may indicate to station 1611 that the allocated time portion is to be used for a relaying operation.

MRTT frame 1720 may comprise a common info field. The common info field may comprise the triggered TXOP sharing mode.

MRTT frame 1720 may comprise a user info field corresponding to station 1611. Station 1611 may be indicated by an AID12 subfield of the user info field. The whole duration of the relaying operation may be indicated in an allocation duration field of the user info field.

The indication of a triggered TXOP sharing mode 3 for a station in an MU-RTS TXS trigger frame may indicate that the station may serve as a relay between the AP and another station. Station 1611 may send (e.g., transmit) a CTS frame, after receiving the MRTT frame, where the TXS mode is 3 and station 1611 is indicated by an AID12 subfield of the user info field. Stations 1611 and 1612 may receive from the AP a trigger frame (TF) initiating uplink transmission from station 1612 to the AP via station 1611. The address of a source station, for example, station 1612, may be indicated in the TF. Station 1611 may act as a relay for uplink transmission.

Station 1611 may send (e.g., transmit) a CTS frame 1721. Station 1611 may send (e.g., transmit) a CTS frame 1721, for example, based on (e.g., in response to) MRTT frame 1720. AP 1610 may send (e.g., transmit) a TF 1722 to stations 1611 and 1612 to initiate uplink transmission from station 1612 to the AP via station 1611, after receiving CTS frame 1721. Station 1612, after receiving TF 1722, may send (e.g., transmit) PPDU 1723 to station 1611. Station 1611 may send (e.g., transmit) an ACK frame 1724 to station 1612. Station 1611 may send (e.g., transmit) an ACK frame 1724 to station 1612, based on (e.g., in response to) PPDU 1723. Station 1611 may not send (e.g., transmit) an ACK frame if an implicit ACK procedure is used. Station 1611 may then send (e.g., transmit) a PPDU 1725 to AP 1610. PPDU 1725 may be based on PPDU 1723. The data payload of PPDU 1725 may be the same as the data payload of PPDU 1723. Station 1611 may receive an ACK frame 1726 from AP 1610. Station 1611 may receive an ACK frame 1726 from AP 1610, for example, based on (e.g., in response to) PPDU 1725. ACK frames 1724 and 1726 may be block ACK (BA) frames.

An additional trigger frame (trigger frame 1722), such as shown in FIG. 17, may be needed to trigger station 1612 to send (e.g., transmit) PPDU 1723, for example, if MRTT frame 1720 allocates station 1611 only. This requirement of an additional trigger frame may increase the overhead of the relaying procedure. The time portion of the TXOP allocated to station 1611 may correspond to the end-to-end duration of the relaying operation. As such, station 1611 may use the allocated time portion to receive PPDU 1723 from station 1612 and to send (e.g., transmit) PPDU 1725 to AP 1610. However, the TXS-based relaying procedure described with respect to FIG. 17 may only be used for a two-hop relaying operation (e.g., with a single relay node in the end-to-end path) and may not be used for relaying operations with greater than two hops (e.g., with more than one relay node in the end-to-end path), for example, if MRTT frame 1720 allocates only station 1611.

As described herein, a TXS-based relaying procedure may be used for relaying uplink traffic from a station to an AP. For example, an AP may send (e.g., transmit) a first frame comprising a first time period of a TXOP allocated to a first station; a second time period of TXOP allocated to a second station; and a first indication that the first time period and the second time period are for a transmission between the AP and the second station via the first station. The first time period may be after the second time period. The AP may receive from the first station a second frame during the first time period. The second frame may be based on a third frame that the first station receives from the second station during the second time period. The need for an additional trigger frame to trigger the start of the uplink transmission may be eliminated. The first frame may further comprise a third time period of the TXOP allocated to a third station, the third time period being before the second time period, where the second station receives a fourth frame from the third station during the third time period. TXS-based relaying procedure can be extended to relaying operations with greater than two hops. The first time period may be before the second time period. AP may send (e.g., transmit) to the first station a second frame before the first time period. The first station may send (e.g., transmit) to the second station a third frame during the first time period. The same trigger frame used for uplink transmission may be used to start the downlink transmission. The first frame may comprise the first time period of the TXOP allocated to the AP instead of the first station; and the second time period of TXOP allocated to the first station. AP may send (e.g., transmit) to the first station a second frame during the first time period. The first station may send (e.g., transmit) to the second station a third frame during the second time period. Accordingly, an allocation to the AP may be allowed in a trigger frame to start the downlink transmission.

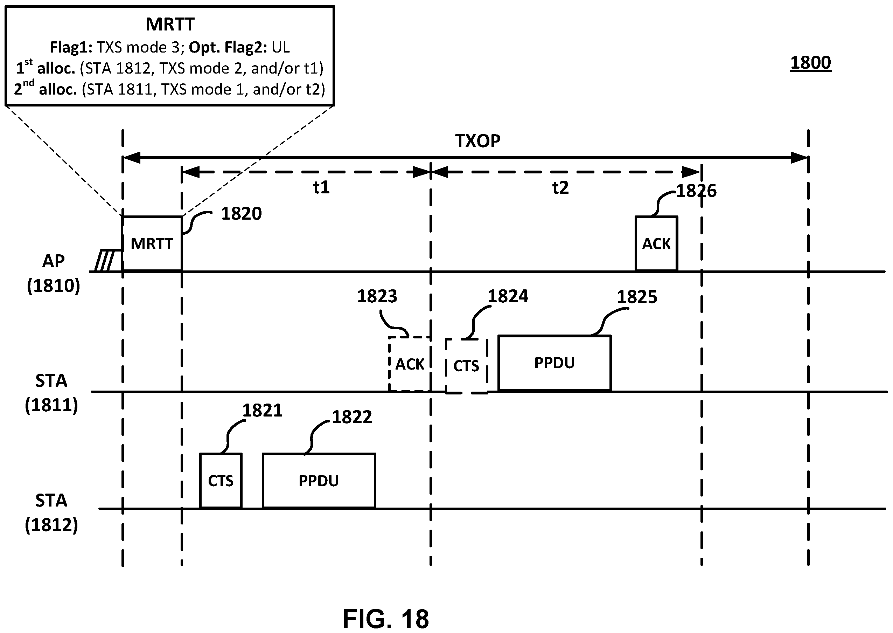

FIG. 18 shows an example 1800 of a TXS-based relaying procedure, which may be used for relaying uplink traffic from a station to an AP. Example 1800 may include an AP 1810 and a plurality of stations 1811 and 1812. Stations 1811 and 1812 may be associated with AP 1810. AP 1810, and stations 1811 and 1812 may be within communication range of each other. Station 1811 may receive data frames from AP 1810 destined to itself. Station 1811 may serve as a relay for station 1812. AP 1810 may prefer to send (e.g., transmit) a PPDU to station 1812 via station 1811 in order to increase the throughput in a downlink transmission. AP 1810 may prefer to receive a PPDU from station 1812 via station 1811, for example, in order to increase the throughput in an uplink transmission.

As shown in FIG. 18, the procedure may begin with AP 1810 sending (e.g., transmitting) an MRTT frame 1820 after obtaining a TXOP. MRTT frame 1820 may comprise a plurality of allocations for a plurality of respective stations. An allocation of MRTT frame 1820 may comprise an identifier of a station, a time period (of the TXOP) allocated to the station, and/or a TXS mode for the allocated time period. MRTT frame 1820 in example 1800 may comprise a first allocation for station 1811 and a second allocation for station 1812. The first allocation may comprise a first time period (denoted t2 in FIG. 18) of the TXOP. The second allocation may comprise a second time period (denoted t1 in FIG. 18) of the TXOP. MRTT frame 1820 may further comprise a first indication that the first time period and the second time period are for a transmission between the AP and station 1812 via station 1811 (i.e., a relay transmission).

The plurality of allocations of MRTT frame 1820 may be provided in a user info field list comprising a plurality of user info fields. Each user info field may correspond to a respective allocation and to a respective station of the allocated stations. For example, MRTT frame 1820 may comprise a first user info field comprising the first allocation for station 1811 and a second user info field comprising the second allocation for station 1812. The first time period may be indicated in an allocation duration subfield of the first user info field. The second time period may be indicated in an allocation duration subfield of the second user info field.

The order of the user info fields in the user info field list may correspond to the order in time of the allocated time periods. For example, as shown in FIG. 18, the first user info field comprising the first allocation comprising the first period may follow, in the user info field list, the second user info field comprising the second allocation comprising the second time period, where the first time period (t2) may follow the second time period (t1) in time. The first time period may be a short inter-frame space (SIFS) after the second time period.

As described herein, an allocation of MRTT frame 1820 may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, if TXS mode is present in the user info field.

The first indication may be provided in a TXS mode subfield of MRTT frame 1820. The TXS mode subfield may be provided in a common info field of MRTT frame 1820. The TXS mode subfield may be set to 3. The TXS mode being equal to 3 may indicate to stations 1811 and 1812 that the allocated time portions are to be used for a relaying operation.

MRTT frame 1820 may further comprise a second indication of whether the transmission between AP 1810 and station 1812 is an uplink transmission or a downlink transmission. The first user info field comprising the first time period may precede, in the user info field list in MRTT frame 1820, the second user info field comprising the second time period, where the second indication may indicate that the transmission is a downlink transmission. The first user info field comprising the first time period may follow, in the user info field list in MRTT frame 1820, the second user info field comprising the second time period, where the second indication may indicate that the transmission is an uplink transmission. MRTT frame 1820 may not comprise a second indication of whether the transmission between AP 1810 and station 1812 is an uplink transmission or a downlink transmission. The second indication may be provided in the common info field of MRTT frame 1820. The second indication may be provided in the common info field of MRTT frame 1820, for example, based on (e.g., in case) MRTT frame 1820 comprising the second indication. The second indication may be provided in one of the reserved bits (e.g., B22, B26, B53 or B63) of the common info field as shown in FIG. 12.

Station 1812, on receiving MRTT frame 1820 in example 1800, may determine that it is being triggered by MRTT frame 1820 to send (e.g., transmit) an uplink frame to AP 1810 via station 1811 in the second time period (t1). Station 1812 may make this determination based on the first indication, the second indication, and/or the order of the first user info field and the second user info field in the user info field list of MRTT frame 1820. Station 1812 may determine that it is to initiate an uplink frame transmission to AP 1810. Station 1812 may determine that it is to initiate an uplink frame transmission to AP 1810, for example, based on the second indication and the presence of its AID 12 address in the first occurring user info field in the user info field list of MRTT frame 1820 (the second user info field). Station 1812 may determine that the uplink frame transmission is to be relayed via station 1811. Station 1812 may determine that the uplink frame transmission is to be relayed via station 1811, for example, based on the first indication and the presence of the AID12 address of station 1811 in the second occurring user info field in the user info field list (the first user info field).

Station 1812 may send (e.g., transmit) a CTS frame 1821. Station 1812 may send (e.g., transmit) a CTS frame 1821, for example, based on (e.g., in response to) MRTT frame 1820. The duration field of CTS frame 1821 may indicate the end of the second time period (t1). The duration field of CTS frame 1821 may indicate the end of the first time period (t2). Station 1812 may then proceed to send (e.g., transmit) a PPDU 1822 to station 1811 during the second time period (t1). Station 1811 may send (e.g., transmit) an ACK frame 1823 to station 1812. Station 1811 may send (e.g., transmit) an ACK frame 1823 to station 1812, for example, based on (e.g., in response to) PPDU 1822. Station 1811 may not send (e.g., transmit) an ACK frame if an implicit ACK procedure is used.

Station 1811, on receiving MRTT frame 1820 in example 1800, may determine that it is to relay an uplink frame from station 1812 to AP 1810. Station 1811 may make this determination based on the first indication, the second indication, and/or the order of the first user info field and the second user info field in the user info field list of MRTT frame 1820. Station 1811 may determine that it is to send (e.g., transmit) an uplink frame to AP 1810 in the first time period (t2). Station 1811 may determine that it is to send (e.g., transmit) an uplink frame to AP 1810 in the first time period (t2), for example, based on the second indication and the presence of its AID12 address in the second occurring and last user info field in the user info field list of MRTT frame 1820 (the first user info field). Station 1811 may determine that the uplink frame is a relay frame to be received from station 1812 during the second time period (t1). Station 1811 may determine that the uplink frame is a relay frame to be received from station 1812 during the second time period (11), for example, based on the first indication and the presence of the AID12 address of station 1812 in the first occurring user info field in the user info field list (the second user info field).

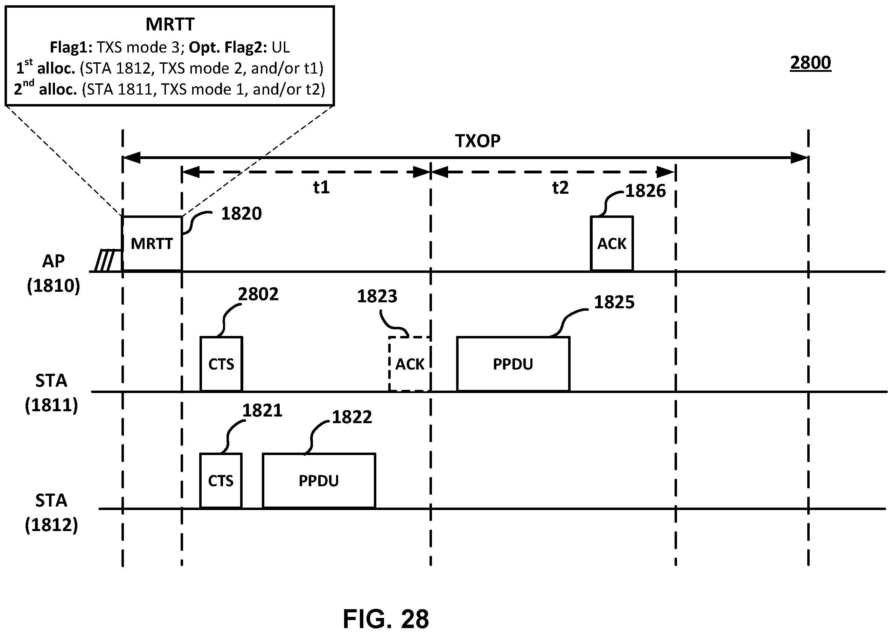

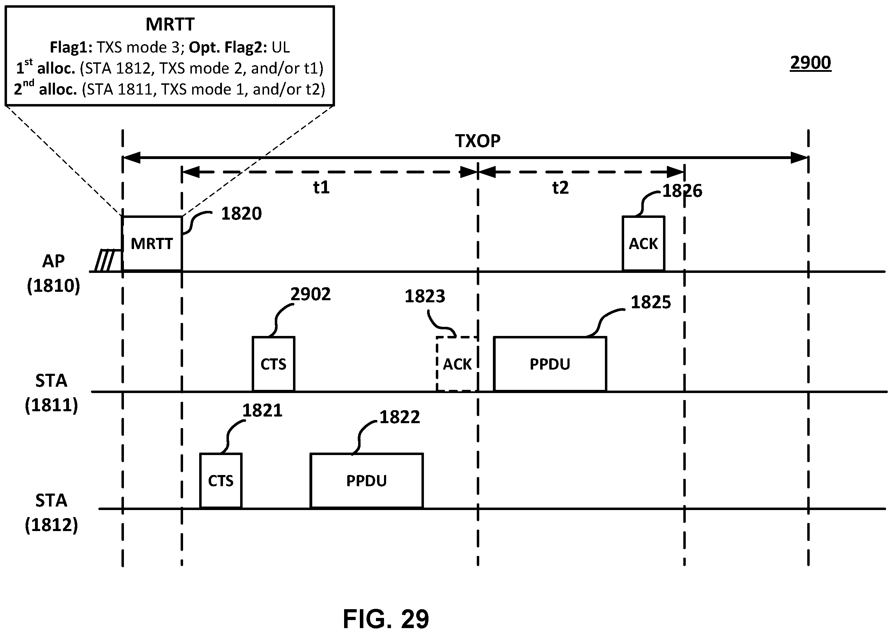

Station 1811 may send (e.g., transmit) a CTS frame 1824 at the beginning of the first time period (t2) before sending (e.g., transmitting) a PPDU 1825 to AP 1810 and after receiving PPDU 1822 from station 1812. Station 1811 may not send (e.g., transmit) a CTS frame before sending (e.g., transmitting) PPDU 1825 to AP 1810. Station 1811, as shown in FIG. 28, may send (e.g., transmit) a CTS frame 2802 at the beginning of the second time period (t1). Station 1811, as shown in FIG. 28, may send (e.g., transmit) a CTS frame 2802 at the beginning of the second time period (t1), for example, based on (e.g., in response to) MRTT frame 1820. The duration field of CTS frame 2802 may indicate the end of the first time period (t2). Station 1811, as shown in FIG. 29, may send (e.g., transmit) a CTS frame 2902, after CTS frame 1821 sent (e.g., transmitted) by station 1812, at the beginning of the second time period (11), for example, based on (e.g., in response to) MRTT frame 1820. The duration field of CTS frame 2902 may indicate the end of the first time period (t2). The time period, t2, for this transmission may start with the transmission of ACK frame 1823. The time period, t2, for this transmission may start with the transmission of CTS frame 1824.

PPDU 1825 may be based on PPDU 1822. The data payload of PPDU 1825 may be the same as the data payload of PPDU 1822. Station 1811 may receive an ACK frame 1826 from AP 1810. Station 1811 may receive an ACK frame 1826 from AP 1810, for example, based on (e.g., in response to) PPDU 1825. ACK frames 1823 and 1826 may be block ACK (BA) frames.

MRTT frame 1820 (not shown in FIG. 18) may comprise the first allocation and the second allocation in a single user info field. MRTT frame 1820 may comprise the first allocation to station 1812 in the AID12 subfield of the user info field as shown in FIG. 11. MRTT frame 1820 may further comprise station 1811, as a receiver station, in the reserved bits of the user info field as shown in FIG. 11. The identification of station 1811 in the first allocation indicates that station 1811 may be the relaying station of the uplink frame. The identification of station 1811 in the first allocation indicates that station 1811 may be the relaying station of the uplink frame, for example, if the first allocation to station 1812 is the only explicit user allocation in the list of allocations (e.g., user info fields) in MRTT frame 1820. An identifier of the receiver station may be provided in the reserved bits of the user info field. Station 1811, being the relaying station of the uplink frame, may send (e.g., transmit) the PPDU received from station 1812 considering the allocation duration subfield and/or reserved bits of the user info field as shown in FIG. 11. This may be the implicit allocation for station 1811 for the first time period (t2).

The second time period (t1) may be provided in the allocation duration subfield of the user info field. The first time period (t2) may be provided in the reserved bits of the user info field, in case an identifier of the receiver station provided in the reserved bits do not use all the reserved bits. The total duration of the second time period and the first time period (t1 + t2) may be provided in the allocation duration subfield of the user info field. MRTT frame 1820 may further comprise a first indication that the first time period is for a transmission between the AP 1810 and station 1812 via station 1811 (i.e., a relay transmission).

Station 1812, on receiving MRTT frame 1820 from AP 1810 in example 1800, may determine that it is being triggered by MRTT frame 1820 to send (e.g., transmit) an uplink frame to station 1811 during the second time period (t1). Station 1812 may make this determination based on the first indication and/or the first user info field in the user info field list of MRTT frame 1820. Station 1812 may determine that it is to send (e.g., transmit) an uplink frame to station 1811 to be sent (e.g., transmitted) to AP 1810. Station 1812 may determine that it is to send (e.g., transmit) an uplink frame to station 1811 to be sent (e.g., transmitted) to AP 1810, for example, based on the first indication, the presence of its AID 12 address in the first user info field in the user info field list of MRTT frame 1820, and the presence of an identifier of station 1811 as a destination station in the first user info field in the user info field list of MRTT frame 1820.

Station 1812 may send (e.g., transmit) a CTS frame 1821. Station 1812 may send (e.g., transmit) a CTS frame 1821, for example, based on (e.g., in response to) MRTT frame 1820. The duration field of CTS frame 1821 may indicate the end of the second time period (t1). The duration field of CTS frame 1821 may indicate the end of the first time period (t2). Station 1812 may then send (e.g., transmit) a PPDU 1822 to station 1811. Station 1811 may send (e.g., transmit) an ACK frame 1823 to station 1812, for example, based on (e.g., in response to) PPDU 1822. Station 1811 may not send (e.g., transmit) an ACK frame if an implicit ACK procedure is used.

Station 1811, on receiving MRTT frame 1820 from AP 1810 in example 1800, may determine that it is being triggered by MRTT frame 1820 to send (e.g., transmit) an uplink frame to be received from station 1812 during the second time period (t1) to AP 1810. Station 1812 may make this determination based on the first indication and/or the first user info field in the user info field list of MRTT frame 1820. Station 1811 may determine that it is to send (e.g., transmit) an uplink frame to be received from station 1812 to AP 1810. Station 1811 may determine that it is to send (e.g., transmit) an uplink frame to be received from station 1812 to AP 1810, for example, based on the first indication, the presence of its AID12 address of station 1812 in the first user info field in the user info field list of MRTT frame 1820, and the presence of its identifier as a destination station in the first user info field in the user info field list of MRTT frame 1820.

Station 1811 may send (e.g., transmit) a CTS frame 1824 at the beginning of the first time period (t2) before sending (e.g., transmitting) a PPDU 1825 to AP 1810 and after receiving PPDU 1822 from station 1812. Station 1811 may not send (e.g., transmit) a CTS frame before sending (e.g., transmitting) PPDU 1825 to station 1812. Station 1811, as shown in FIG. 28, may send (e.g., transmit) a CTS frame 2802 at the beginning of the second time period (t1). Station 1811, such as shown in FIG. 28, may send (e.g., transmit) a CTS frame 2802 at the beginning of the second time period (11), for example, based on (e.g., in response to) MRTT frame 1820. The duration field of CTS frame 2802 may indicate the end of the first time period (t2). Station 1811, as shown in FIG. 29, may send (e.g., transmit) a CTS frame 2902, after CTS frame 1821 sent (e.g., transmitted) by station 1812, at the beginning of the second time period (t1). Station 1811, as shown in FIG. 29, may send (e.g., transmit) a CTS frame 2902, after CTS frame 1821 sent (e.g., transmitted) by station 1812, at the beginning of the second time period (t1), for example, based on (e.g., in response to) MRTT frame 1820. The duration field of CTS frame 2902 may indicate the end of the first time period (t2). Station 1811 may determine the duration for sending (e.g., transmitting) PPDU 1825 to AP 1810 considering the allocation duration subfield and/or reserved bits of the first user info field in the user info field list of MRTT frame 1820. Station 1811 may use the same duration value for sending (e.g., transmitting) PPDU 1825 to AP 1810, where only the second time period (t1) is provided in the allocation duration subfield of the user info field. Station 1811 may use the first time period (t2) value for sending (e.g., transmitting) PPDU 1825 to AP 1810, where the first time period (t2) is provided in the reserved bits of the user info field (in case an identifier of the receiver station provided in the reserved bits do not use all the reserved bits). Station 1811 may calculate and use the remaining time period (t2) for sending (e.g., transmitting) PPDU 1825 to AP 1810, where the total duration of the second time period and the first time period (t1 + t2) are provided in the allocation duration subfield of the user info field.

The time period, t2, for this transmission may start with the transmission of ACK frame 1823. The time period, t2, for this transmission may start with the transmission of CTS frame 1824. PPDU 1825 may be based on PPDU 1822. The data payload of PPDU 1825 may be the same as the data payload of PPDU 1822. Station 1811 may receive an ACK frame 1826 from AP 1810. Station 1811 may receive an ACK frame 1826 from AP 1810, for example, based on (e.g., in response to) PPDU 1825. ACK frames 1823 and 1826 may be block ACK (BA) frames.

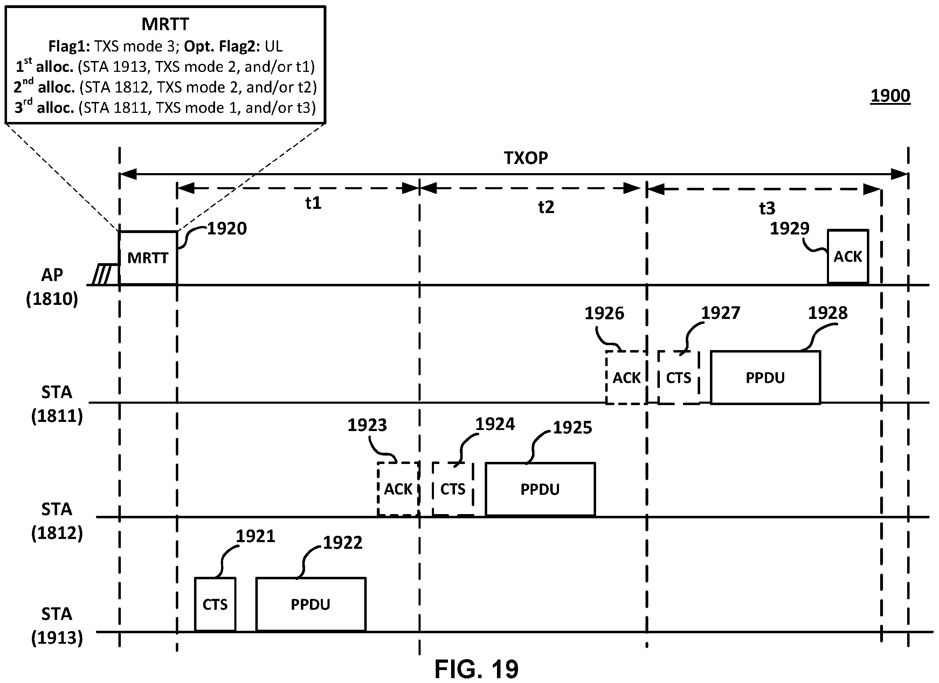

The TXS-based relaying procedure described with respect to FIG. 18, such as shown in example 1800, may various advantages. For example, the procedure described herein may eliminate a need for an additional trigger frame to trigger the start of an uplink transmission. This may be achieved by allocating a TXS time period, not only to the relay station, but also to the source station of the uplink transmission. Further, as described with respect to FIG. 19, the TXS-based relaying procedure of FIG. 18 may be readily extended to relaying operations with greater than two hops.

FIG. 19 shows another example 1900 of a TXS-based relaying procedure, which may be used for relaying uplink traffic from a station to an AP. Example 1900 as shown may include an AP 1810 and a plurality of stations 1811, 1812 and 1913. Stations 1811, 1812 and 1913 may be associated with AP 1810. AP 1810, and stations 1811, 1812 and 1913 may be within communication range of each other. Stations 1811 and 1812 may receive data frames from AP 1810 destined to themselves. Stations 1811 and 1812 may serve as relays for station 1913. AP 1810 may prefer to send (e.g., transmit) a PPDU to station 1913 via stations 1811 and 1812 in order to increase the throughput in a downlink transmission. AP 1810 may prefer to receive a PPDU from station 1913 via stations 1811 and 1812 in order to increase the throughput in an uplink transmission.

The procedure, as shown in FIG. 19, may begin with AP 1810 sending (e.g., transmitting) an MRTT frame 1920 after obtaining a TXOP. MRTT frame 1920 may comprise a plurality of allocations for a plurality of respective stations. An allocation of MRTT frame 1920 may comprise an identifier of a station, a time period (of the TXOP) allocated to the station, and/or a TXS mode for the allocated time period. MRTT frame 1920, in example 1900, may comprise a first allocation for station 1811, a second allocation for station 1812 and a third allocation for station 1913. The first allocation may comprise a first time period (denoted t3 in FIG. 19) of the TXOP. The second allocation may comprise a second time period (denoted t2 in FIG. 19) of the TXOP. The third allocation may comprise a third time period (denoted t1 in FIG. 19) of the TXOP. MRTT frame 1920 may further comprise a first indication that the first time period, the second time period and the third time period are for a transmission between the AP and station 1913 via stations 1811 and 1812 (i.e., a relay transmission).

The plurality of allocations of MRTT frame 1920 may be provided in a user info field list comprising a plurality of user info fields. Each user info field may correspond to a respective allocation and to a respective station of the allocated stations. For example, MRTT frame 1920 may comprise a first user info field comprising the first allocation for station 1811, a second user info field comprising the second allocation for station 1812 and a third user info field comprising the third allocation for station 1913. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list may correspond to the order in time of the allocated time periods. For example, as shown in FIG. 19, the first user info field comprising the first allocation comprising the first period may follow, in the user info field list, the second user info field comprising the second allocation comprising the second time period, where the first time period (t3) follows the second time period (t2) in time. The first time period may be a short inter-frame space (SIFS) after the second time period. The second user info field, as shown in FIG. 19, comprising the second allocation comprising the second period may follow, in the user info field list, the third user info field comprising the third allocation comprising the third time period, where the second time period (t2) follows the third time period (t1) in time. The second time period may be a SIFS after the third time period.

An allocation of MRTT frame 1920, as mentioned herein, may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, If TXS mode is present in the user info field.

The first indication may be provided in a TXS mode subfield of MRTT frame 1920. The TXS mode subfield may be provided in a common info field of MRTT frame 1920. The TXS mode subfield may be set to 3. The TXS mode being equal to 3 may indicate to stations 1811, 1812 and 1913 that the allocated time portions are to be used for a relaying operation.

MRTT frame 1920 may further comprise a second indication of whether the transmission between AP 1810 and station 1913 is an uplink transmission or a downlink transmission. The first user info field comprising the first time period may precede, in the user info field list in MRTT frame 1920, the second user info field comprising the second time period and the second user info field comprising the second time period may precede, in the user info field list in MRTT frame 1920, the third user info field comprising the third time period, where the second indication indicates that the transmission is a downlink transmission. The first user info field comprising the first time period may follow, in the user info field list in MRTT frame 1920, the second user info field comprising the second time period and the second user info field comprising the second time period may follow, in the user info field list in MRTT frame 1920 the third user info field comprising the third time period, where the second indication indicates that the transmission is an uplink transmission. MRTT frame 1920 may not comprise a second indication of whether the transmission between AP 1810 and station 1913 is an uplink transmission or a downlink transmission. The second indication may be provided in the common info field of MRTT frame 1920. The second indication may be provided in the common info field of MRTT frame 1920, for example, based on MRTT frame 1920 comprising the second indication. The second indication may be provided in one of the reserved bits (e.g., B22, B26, B53 or B63) of the common info field as shown in FIG. 12.

Station 1913, on receiving MRTT frame 1920 in example 1900, may determine that it is being triggered by MRTT frame 1920 to send (e.g., transmit) an uplink frame to AP 1810 via stations 1811 and 1812 during the third time period (t1). Station 1913 may make this determination based on the first indication, the second indication, and/or the order of the first user info field, the second user info field and the third user info field in the user info field list of MRTT frame 1920. Station 1913 may determine that it is to initiate an uplink frame transmission to AP 1810. Station 1913 may determine that it is to initiate an uplink frame transmission to AP 1810, for example, based on the second indication and the presence of its AID12 address in the first occurring user info field in the user info field list of MRTT frame 1920 (the third user info field). Station 1913 may determine that the uplink frame transmission is to be relayed via station 1812. Station 1913 may determine that the uplink frame transmission is to be relayed via station 1812, for example, based on the first indication and the presence of the AID12 address of station 1812 in the second occurring user info field in the user info field list (the second user info field).

Station 1913 may send (e.g., transmit) a CTS frame 1921. Station 1913 may send (e.g., transmit) a CTS frame 1921, for example, based on (e.g., in response to) MRTT frame 1920. The duration field of CTS frame 1921 may indicate the end of the third time period (t1). The duration field of CTS frame 1921 may indicate the end of the second time period (t2). The duration field of CTS frame 1921 may indicate the end of the first time period (t3). Station 1913 may then proceed to send (e.g., transmit) a PPDU 1922 to station 1812 during the third time period (t1). Station 1812 may send (e.g., transmit) an ACK frame 1923 to station 1913. Station 1812 may send (e.g., transmit) an ACK frame 1923 to station 1913, for example, based on (e.g., in response to) PPDU 1922. Station 1812 may not send (e.g., transmit) an ACK frame if an implicit ACK procedure is used.

Station 1812, on receiving MRTT frame 1920 in example 1900, may determine that it is to relay an uplink frame from station 1913 to AP 1810 (via station 1811). Station 1812 may make this determination based on the first indication, the second indication, and/or the order of the first user info field, the second user info field and the third user info field in the user info field list of MRTT frame 1920. Station 1812 may determine that it is to send (e.g., transmit) an uplink frame during the second time period (t2). Station 1812 may determine that it is to send (e.g., transmit) an uplink frame during the second time period (t2), for example, based on the second indication and the presence of its AID12 address in the second occurring user info field in the user info field list of MRTT frame 1920 (the second user info field). Station 1812 may determine that the uplink frame transmission is to be relayed via station 1811. Station 1812 may determine that the uplink frame transmission is to be relayed via station 1811, for example, based on the first indication and the presence of the AID12 address of station 1811 in the third occurring user info field in the user info field list (the first user info field).

Station 1812 may send (e.g., transmit) a CTS frame 1924 at the beginning of the second time period (t2) before sending (e.g., transmitting) a PPDU 1925 to station 1811 and after receiving PPDU 1922 from station 1913. Station 1812 may not send (e.g., transmit) a CTS frame before sending (e.g., transmitting) PPDU 1925 to station 1811. Station 1812 may send (e.g., transmit) a CTS frame at the beginning of the third time period (t1). Station 1812 may send (e.g., transmit) a CTS frame at the beginning of the third time period (t1), for example, based on (e.g., in response to) MRTT frame 1920 (not shown in FIG. 19). The duration field of the CTS frame may indicate the end of the first time period (t3). Station 1812 may send (e.g., transmit) a CTS frame, after CTS frame 1921 sent (e.g., transmitted) by station 1913, at the beginning of the third time period (t1). Station 1812 may send (e.g., transmit) a CTS frame, after CTS frame 1921 sent (e.g., transmitted) by station 1913, at the beginning of the third time period (t1), for example, based on (e.g., in response to) MRTT frame 1920 (not shown in FIG. 19). The duration field of the CTS frame may indicate the end of the first time period (t3). The time period, t2, for this transmission may start with the transmission of ACK frame 1923. The time period, t2, for this transmission may start with the transmission of CTS frame 1924. Station 1811 may send (e.g., transmit) an ACK frame 1926 to station 1812. Station 1811 may send (e.g., transmit) an ACK frame 1926 to station 1812, for example, based on (e.g., in response to) PPDU 1925. Station 1811 may not send (e.g., transmit) an ACK frame if an implicit ACK procedure is used.

Station 1811, on receiving MRTT frame 1920 in example 1900, may determine that it is to relay an uplink frame from station 1812 to AP 1810. Station 1811 may make this determination based on the first indication, the second indication, and/or the order of the first user info field and the second user info field in the user info field list of MRTT frame 1920. Station 1811 may determine that it is to send (e.g., transmit) an uplink frame to AP 1810 during the first time period (t3). Station 1811 may determine that it is to send (e.g., transmit) an uplink frame to AP 1810 during the first time period (t3), for example, based on the second indication and the presence of its AID 12 address in the third occurring and last user info field in the user info field list of MRTT frame 1920 (the first user info field). Station 1811 may determine that the uplink frame is a relay frame to be received from station 1812 during the second time period (t2). Station 1811 may determine that the uplink frame is a relay frame to be received from station 1812 during the second time period (t2), for example, based on the first indication and the presence of the AID12 address of station 1812 in the second occurring user info field in the user info field list (the second user info field).

Station 1811 may send (e.g., transmit) a CTS frame 1927 at the beginning of the first time period (t3) before sending (e.g., transmitting) a PPDU 1928 to AP 1810, and after receiving PPDU 1925 from station 1812. Station 1811 may not send (e.g., transmit) a CTS frame before sending (e.g., transmitting) PPDU 1928 to AP 1810. Station 1811 may send (e.g., transmit) a CTS frame at the beginning of the third time period (t1), for example, based on (e.g., in response to) MRTT frame 1920 (not shown in FIG. 19). The duration field of the CTS frame may indicate the end of the first time period (t3). Station 1811 may send (e.g., transmit) a CTS frame, after CTS frame 1921 sent (e.g., transmitted) by station 1913 at the beginning of the third time period (t1). Station 1811 may send (e.g., transmit) a CTS frame, after CTS frame 1921 sent (e.g., transmitted) by station 1913 at the beginning of the third time period (t1), for example, based on (e.g., in response to) MRTT frame 1920 (not shown in FIG. 19). The duration field of the CTS frame may indicate the end of the first time period (t3). The time period, t3, for this transmission may start with the transmission of ACK frame 1926. The time period, t3, for this transmission may start with the transmission of CTS frame 1927. AP 1810 may send (e.g., transmit) an ACK frame 1929 to station 1811. AP 1810 may send (e.g., transmit) an ACK frame 1929 to station 1811, for example, based on (e.g., in response to) PPDU 1928,

PPDU 1928 may be based on PPDU 1925, and PPDU 1925 may be based on PPDU 1922. The data payload of PPDU 1928 may be the same as the data payload of PPDU 1925, and the data payload of PPDU 1925 may be the same as the data payload of PPDU 1922. Station 1811 may receive an ACK frame 1929 from AP 1810. Station 1811 may receive an ACK frame 1929 from AP 1810, based on (e.g., in response to) PPDU 1928. ACK frames 1923, 1926 and 1929 may be block ACK (BA) frames. The proposed TXS-based relaying procedure, as shown in example 1900, has been successfully extended to relaying operations with greater than two hops.

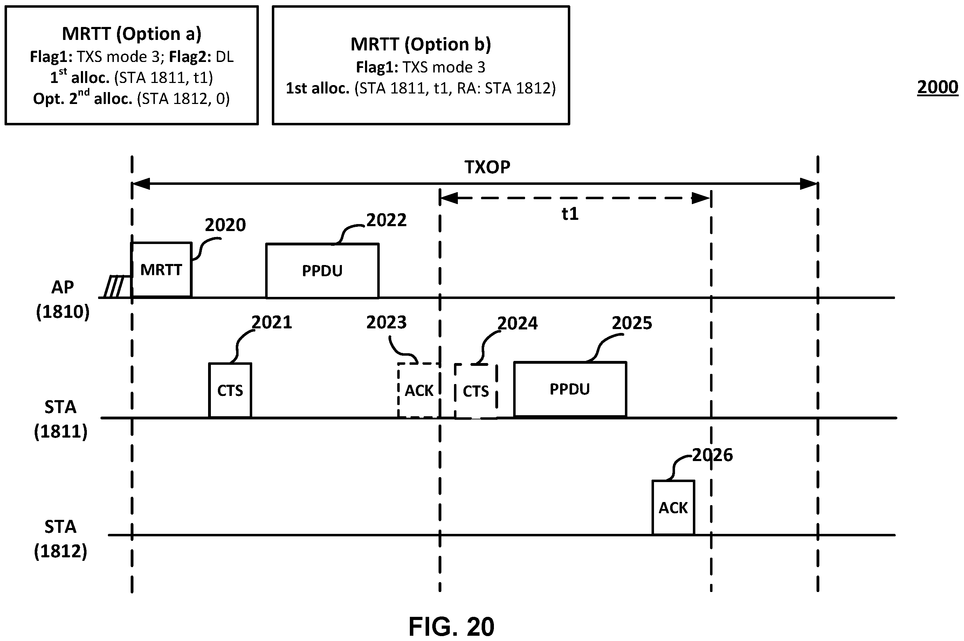

FIG. 20 shows an example 2000 of a TXS-based relaying procedure, which may be used for relaying downlink traffic from an AP to a station. Example 2000 may include an AP 1810 and a plurality of stations 1811 and 1812. Stations 1811 and 1812 may be associated with AP 1810. AP 1810, and stations 1811 and 1812 may be within communication range of each other. Station 1811 may receive data frames from AP 1810 destined to itself. Station 1811 may serve as a relay for station 1812. AP 1810 may prefer to send (e.g., transmit) a PPDU to station 1812 via station 1811 in order to increase the throughput in a downlink transmission. AP 1810 may prefer to receive a PPDU from station 1812 via station 1811 in order to increase the throughput in an uplink transmission.

The procedure, as shown in FIG. 20, may begin with AP 1810 sending (e.g., transmitting) an MRTT frame 2020 (shown as "Option a" in FIG. 20) after obtaining a TXOP. MRTT frame 2020 may comprise a plurality of allocations for a plurality of respective stations. An allocation of MRTT frame 2020 may comprise an identifier of a station, a time period (of the TXOP) allocated to the station, and/or a TXS mode for the allocated time period. MRTT frame 2020, in example 2000, may comprise a first allocation for station 1811 and an optional second allocation for station 1812. The first allocation may comprise a first time period (denoted t1 in FIG. 20) of the TXOP. The second allocation may comprise a second time period (denoted t2 in FIG. 20) of the TXOP. MRTT frame 2020 may further comprise a first indication that the first time period and the second time period are for a transmission between the AP and station 1812 via station 1811 (i.e., a relay transmission). The second time period (t2) allocated to station 1812 may be equal to zero.

The plurality of allocations of MRTT frame 2020 may be provided in a user info field list comprising a plurality of user info fields. Each user info field may correspond to a respective allocation and to a respective station of the allocated stations. For example, MRTT frame 2020 may comprise a first user info field comprising the first allocation for station 1811 and a second user info field comprising the second allocation for station 1812. The first time period may be indicated in an allocation duration subfield of the first user info field. The second time period may be indicated in an allocation duration subfield of the second user info field.

The order of the user info fields in the user info field list may correspond to the order in time of the allocated time periods. For example, as shown in FIG. 20, the first user info field comprising the first allocation comprising the first period may precede, in the user info field list, the second user info field comprising the second allocation comprising the second time period, where the first time period (t1) precedes the second time period (t2) in time. The second time period may be a short inter-frame space (SIFS) after the first time period.

An allocation of MRTT frame 2020 may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, if TXS mode is present in the user info field.

The first indication may be provided in a TXS mode subfield of MRTT frame 2020. The TXS mode subfield may be provided in a common info field of MRTT frame 2020. The TXS mode subfield may be set to 3. The TXS mode being equal to 3 may indicate to stations 1811 and 1812 that the allocated time portions are to be used for a relaying operation.

MRTT frame 2020 may further comprise a second indication of whether the transmission between AP 1810 and station 1812 is an uplink transmission or a downlink transmission. The first user info field comprising the first time period may precede, in the user info field list in MRTT frame 2020, the second user info field comprising the second time period, where the second indication indicates that the transmission is a downlink transmission. The first user info field comprising the first time period may follow, in the user info field list in MRTT frame 2020, the second user info field comprising the second time period, where the second indication indicates that the transmission is an uplink transmission. MRTT frame 2020 may not comprise a second indication of whether the transmission between AP 1810 and station 1812 is an uplink transmission or a downlink transmission. The second indication may be provided in the common info field of MRTT frame 2020. The second indication may be provided in the common info field of MRTT frame 2020, for example, based on (e.g., in case) MRTT frame 2020 comprising the second indication. The second indication may be provided in one of the reserved bits (e.g., B22, B26, B53 or B63) of the common info field as shown in FIG. 12.

Station 1811, on receiving MRTT frame 2020 in example 2000, may determine that it is being triggered by MRTT frame 2020 to send (e.g., transmit) a downlink frame (to be received from AP 1810) to station 1812 during the first time period (t1). Station 1811 may make this determination based on the first indication, the second indication, and/or the order of the first user info field and the second user info field in the user info field list of MRTT frame 2020. Station 1811 may determine that it is to relay a downlink frame transmission to station 1812, where it is to receive the downlink frame transmission from AP 1810. Station 1811 may determine that it is to relay a downlink frame transmission to station 1812, where it is to receive the downlink frame transmission from AP 1810, for example, based on the second indication and the presence of its AID 12 address in the first occurring user info field in the user info field list of MRTT frame 2020 (the first user info field). Station 1811 may determine that the downlink frame transmission is to be relayed to station 1812. Station 1811 may determine that the downlink frame transmission is to be relayed to station 1812, based on the first indication and the presence of the AID12 address of station 1812 in the second occurring user info field in the user info field list (the second user info field).

Station 1811 may send (e.g., transmit) a CTS frame 2021. Station 1811 may send (e.g., transmit) a CTS frame 2021, for example, based on (e.g., in response to) MRTT frame 2020. The duration field of CTS frame 2021 may indicate the beginning of the first time period (t1). The duration field of CTS frame 2021 may indicate the end of the first time period (t1). AP 1810, on receiving CTS frame 2021, may send (e.g., transmit) a PPDU 2022 to station 1811. Station 1811 may send (e.g., transmit) an ACK frame 2023 to AP 1810. Station 1811 may send (e.g., transmit) an ACK frame 2023 to AP 1810, for example, based on (e.g., in response to) PPDU 2022. Station 1811 may not send (e.g., transmit) an ACK frame if an implicit ACK procedure is used.

Station 1811 may send (e.g., transmit) a CTS frame 2024 at the beginning of the first time period (t1) before sending (e.g., transmitting) a PPDU 2025 to station 1812 and after receiving PPDU 2022 from AP 1810. Station 1811 may not send (e.g., transmit) a CTS frame before sending (e.g., transmitting) PPDU 2025 to station 1812. the time period, t1, for this transmission may start with the transmission of ACK frame 2023. The time period, t1, for this transmission may start with the transmission of CTS frame 2024.

PPDU 2025 may be based on PPDU 2022. The data payload of PPDU 2025 may be the same as the data payload of PPDU 2022. Station 1811 may receive an ACK frame 2026 from station 1812. Station 1811 may receive an ACK frame 2026 from station 1812, for example, based on (e.g., in response to) PPDU 2025. ACK frames 2023 and 2026 may be block ACK (BA) frames.

Station 1812, on receiving MRTT frame 2020 in example 2000, may determine that it is to receive a downlink frame from AP 1810 via station 1811 and that it is the destination station of the downlink frame. Station 1812 may make this determination based on the first indication, the second indication, and/or the order of the first user info field and the second user info field in the user info field list of MRTT frame 2020. Station 1812 may determine that it is to receive a downlink frame destined to itself. Station 1812 may determine that it is to receive a downlink frame destined to itself, for example, based on the second indication and the presence of its AID12 address in the second occurring and last user info field in the user info field list of MRTT frame 2020 (the second user info field) (and/or the second time period allocated to station 1812 being equal to zero). Station 1812 may determine that the downlink frame is a relay frame to be received from station 1811 during the first time period (t1). Station 1812 may determine that the downlink frame is a relay frame to be received from station 1811 during the first time period (11), for example, based on the first indication and the presence of the AID12 address of station 1811 in the first occurring user info field in the user info field list (the first user info field). Station 1812 may send (e.g., transmit) a CTS frame. Station 1812 may send (e.g., transmit) a CTS frame, for example, based on (e.g., in response to) MRTT frame 2020 (not shown in FIG. 20). The duration field of the CTS frame may indicate the end of the first time period (t1). Station 1812 may send (e.g., transmit) a CTS frame, after CTS frame 2021 sent (e.g., transmitted) by station 1811. Station 1812 may send (e.g., transmit) a CTS frame, after CTS frame 2021 sent (e.g., transmitted) by station 1811, for example, based on (e.g., in response to) MRTT frame 2020 (not shown in FIG. 20). The duration field of the CTS frame may indicate the end of the first time period (t1). Station 1812 may send (e.g., transmit) a CTS frame at the beginning of the first time period (t1) (not shown in FIG. 20). The duration field of the CTS frame may indicate the end of the first time period (t1).

MRTT frame 2020 (shown as "Option b" in FIG. 20) may not comprise the second allocation and may only comprise the first allocation with the receiver address indicated. MRTT frame 2020 may further comprise an identifier of station 1812 as a receiver station. The identification of station 1812 in the first allocation indicates that station 1812 may be the destination station of the downlink frame. The identification of station 1812 in the first allocation indicates that station 1812 may be the destination station of the downlink frame, for example, if the first allocation to station 1811 is the only allocation in the list of allocations (e.g., user info fields) in MRTT frame 2020. An identifier of the receiver station may be provided in the reserved bits of the user info field as shown in FIG. 11. MRTT frame 2020 may further comprise a first indication that the first time period is for a transmission between the AP 1810 and station 1812 via station 1811 (i.e., a relay transmission).

Station 1811, on receiving MRTT frame 2020 from AP 1810 in example 2000, may determine that it is being triggered by MRTT frame 2020 to send (e.g., transmit) a downlink frame (to be received from AP 1810) to station 1812 during the first time period (t1). Station 1811 may make this determination based on the first indication and/or the first user info field in the user info field list of MRTT frame 2020. Station 1811 may determine that it is to relay a downlink frame to station 1812 to be received from AP 1810. Station 1811 may determine that it is to relay a downlink frame to station 1812 to be received from AP 1810, for example, based on the first indication, the presence of its AID 12 address in the first user info field in the user info field list of MRTT frame 2020, and the presence of an identifier of station 1812 as a destination station in the first user info field in the user info field list of MRTT frame 2020.

Station 1811 may send (e.g., transmit) a CTS frame 2021. Station 1811 may send (e.g., transmit) a CTS frame 2021, for example, based on (e.g., in response to) MRTT frame 2020. The duration field of CTS frame 2021 may indicate the beginning of the first time period (t1). The duration field of CTS frame 2021 may indicate the end of the first time period (t1). Station 1811 may then wait to receive the downlink frame from AP 1810. AP 1810, on receiving CTS frame 2021, may send (e.g., transmit) a PPDU 2022 to station 1811. Station 1811 may send (e.g., transmit) an ACK frame 2023 to AP 1810. Station 1811 may send (e.g., transmit) an ACK frame 2023 to AP 1810, for example, based on (e.g., in response to) PPDU 2022. Station 1811 may not send (e.g., transmit) an ACK frame if an implicit ACK procedure is used.

Station 1811 may send (e.g., transmit) a CTS frame 2024 at the beginning of the first time period (t1) before sending (e.g., transmitting) a PPDU 2025 to station 1812 and after receiving PPDU 2022 from AP 1810. Station 1811 may not send (e.g., transmit) a CTS frame before sending (e.g., transmitting) PPDU 2025 to station 1812. The time period, t1, for this transmission may start with the transmission of ACK frame 2023. The time period, t1, for this transmission may start with the transmission of CTS frame 2024.

PPDU 2025 may be based on PPDU 2022. The data payload of PPDU 2025 may be the same as the data payload of PPDU 2022. Station 1811 may receive an ACK frame 2026 from station 1812. Station 1811 may receive an ACK frame 2026 from station 1812, for example, based on (e.g., in response to) PPDU 2025. ACK frames 2023 and 2026 may be block ACK (BA) frames.

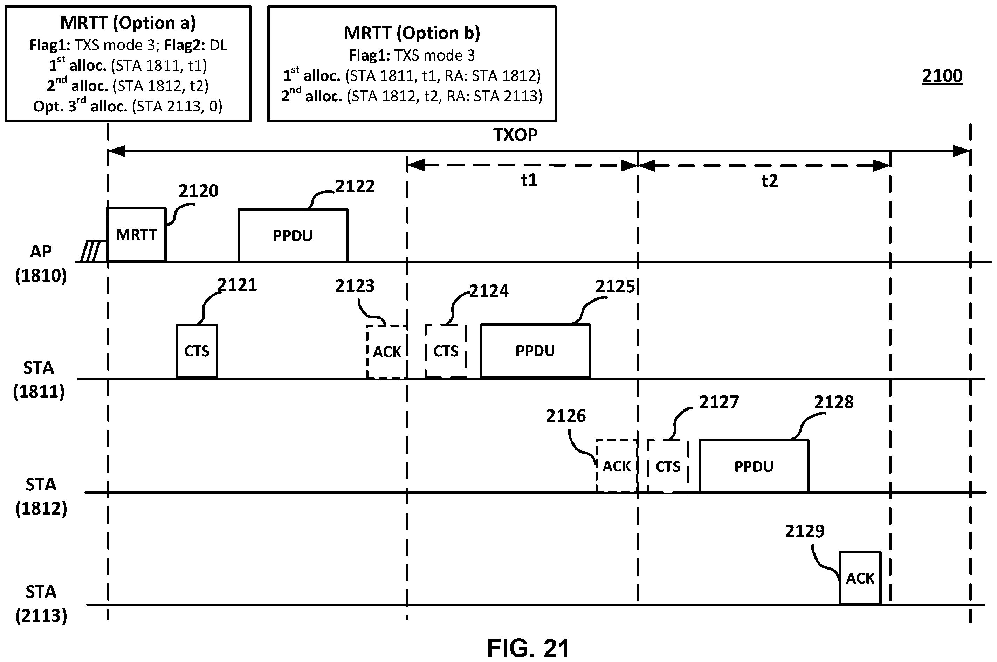

Stations 1811 and 1812, as described herein in the TXS-based relaying procedure of FIG. 20, may obtain from MRTT frame 2020 all information necessary to successfully relay and receive the downlink frame from AP 1810. No modification of PPDU 2022 to include relay information may be needed. The TXS-based relaying procedure of FIG. 20, as shown in example 2000, may use multiple station allocations for the downlink transmission. Hence, as described below with reference to FIG. 21, the TXS-based relaying procedure of FIG. 20 may be readily extended to relaying operations with greater than two hops.

FIG. 21 shows another example 2100 of a TXS-based relaying procedure, which may be used for relaying downlink traffic from an AP to a station. Example 2100 may include an AP 1810 and a plurality of stations 1811, 1812 and 2113. Stations 1811, 1812 and 2113 may be associated with AP 1810. AP 1810, and stations 1811, 1812 and 2113 may be within communication range of each other. Stations 1811 and 1812 may receive data frames from AP 1810 destined to themselves. Stations 1811 and 1812 may serve as relays for station 2113. AP 1810 may prefer to send (e.g., transmit) a PPDU to station 2113 via stations 1811 and 1812 in order to increase the throughput in a downlink transmission. AP 1810 may prefer to receive a PPDU from station 2113 via stations 1811 and 1812 in order to increase the throughput in an uplink transmission.

The procedure, as shown in FIG. 21, may begin with AP 1810 sending (e.g., transmitting) an MRTT frame 2120 (shown as "Option a" in FIG. 21) after obtaining a TXOP. MRTT frame 2120 (e.g., option a) may comprise a plurality of allocations for a plurality of respective stations. An allocation of MRTT frame 2120 may comprise an identifier of a station, a time period (of the TXOP) allocated to the station, and/or a TXS mode for the allocated time period. MRTT frame 2120, in example 2100, may comprise a first allocation for station 1811, a second allocation for station 1812, and an optional third allocation for station 2113. The first allocation may comprise a first time period (denoted t1 in FIG. 21) of the TXOP. The second allocation may comprise a second time period (denoted t2 in FIG. 21) of the TXOP. The third allocation may comprise a third time period (denoted t3 in FIG. 21) of the TXOP. MRTT frame 2120 may further comprise a first indication that the first time period and the second time period are for a transmission between the AP and station 2113 via stations 1811 and 1812 (i.e., a relay transmission). The third time period (t3) allocated to station 2113 may be equal to zero.

The plurality of allocations of MRTT frame 2120 may be provided in a user info field list comprising a plurality of user info fields. Each user info field may correspond to a respective allocation and to a respective station of the allocated stations. For example, MRTT frame 2120 may comprise a first user info field comprising the first allocation for station 1811, a second user info field comprising the second allocation for station 1812 and a third user info field comprising the third allocation for station 2113. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list may correspond to the order in time of the allocated time periods. For example, the first user info field, as shown in FIG. 21, comprising the first allocation comprising the first period may precede, in the user info field list, the second user info field comprising the second allocation comprising the second time period, where the first time period (t1) precedes the second time period (t2) in time. The second time period may be a short inter-frame space (SIFS) after the first time period. The second user info field, as shown in FIG. 21, comprising the second allocation comprising the second period may precede, in the user info field list, the third user info field comprising the third allocation comprising the third time period, where the second time period (t2) precedes the third time period (t3) in time. The third time period may be a SIFS after the second time period.

An allocation of MRTT frame 2120 may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, if TXS mode is present in the user info field.

The first indication may be provided in a TXS mode subfield of MRTT frame 2120. The TXS mode subfield may be provided in a common info field of MRTT frame 2120. The TXS mode subfield may be set to 3. The TXS mode being equal to 3 may indicate to stations 1811, 1812 and 2113 that the allocated time portions are to be used for a relaying operation.

MRTT frame 2120 may further comprise a second indication of whether the transmission between AP 1810 and station 2113 is an uplink transmission or a downlink transmission. The first user info field comprising the first time period may precede, in the user info field list in MRTT frame 2120, the second user info field comprising the second time period and the second user info field comprising the second time period may precede, in the user info field list in MRTT frame 2120, the third user info field comprising the third time period, where the second indication indicates that the transmission is a downlink transmission. The first user info field comprising the first time period may follow, in the user info field list in MRTT frame 2120, the second user info field comprising the second time period and the second user info field comprising the second time period may follow, in the user info field list in MRTT frame 2120, the third user info field comprising the third time period, where the second indication indicates that the transmission is an uplink transmission. MRTT frame 2120 may not comprise a second indication of whether the transmission between AP 1810 and station 2113 is an uplink transmission or a downlink transmission. The second indication may be provided in the common info field of MRTT frame 2120. The second indication may be provided in the common info field of MRTT frame 2120, based on (e.g., in case) MRTT frame 2120 comprises the second indication. The second indication may be provided in one of the reserved bits (e.g., B22, B26, B53 or B63) of the common info field as shown in FIG. 12.

Station 1811, on receiving MRTT frame 2120 in example 2100, may determine that it is being triggered by MRTT frame 2120 to send (e.g., transmit) a downlink frame (to be received from AP 1810) to station 1812 during the first time period (t1). Station 1811 may make this determination based on the first indication, the second indication, and/or the order of the first user info field, the second user info field and the third user info field in the user info field list of MRTT frame 2120. Station 1811 may determine that it is to relay a downlink frame transmission to station 1812, where it is to receive the downlink frame transmission from AP 1810. Station 1811 may determine that it is to relay a downlink frame transmission to station 1812, where it is to receive the downlink frame transmission from AP 1810, for example, based on the second indication and the presence of its AID12 address in the first occurring user info field in the user info field list of MRTT frame 2120 (the first user info field). Station 1811 may determine that the downlink frame transmission is to be relayed to station 1812. Station 1811 may determine that the downlink frame transmission is to be relayed to station 1812, based on the first indication and the presence of the AID 12 address of station 1812 in the second occurring user info field in the user info field list (the second user info field).

Station 1811 may send (e.g., transmit) a CTS frame 2121. Station 1811 may send (e.g., transmit) a CTS frame 2121, for example, based on (e.g., in response to) MRTT frame 2120. The duration field of CTS frame 2121 may indicate the beginning of the first time period (t1). The duration field of CTS frame 2121 may indicate the end of the first time period (t1). The duration field of CTS frame 2121 may indicate the end of the second time period (t2). AP 1810, on receiving CTS frame 2121, may send (e.g., transmit) a PPDU 2122 to station 1811. Station 1811 may send (e.g., transmit) an ACK frame 2123 to AP 1810. Station 1811 may send (e.g., transmit) an ACK frame 2123 to AP 1810, for example, based on (e.g., in response to) PPDU 2122. Station 1811 may not send (e.g., transmit) an ACK frame if an implicit ACK procedure is used.

Station 1811 may send (e.g., transmit) a CTS frame 2124 at the beginning of the first time period (t1) before sending (e.g., transmitting) a PPDU 2125 to station 1812 and after receiving PPDU 2122 from AP 1810. Station 1811 may not send (e.g., transmit) a CTS frame before sending (e.g., transmitting) PPDU 2125 to station 1812. The time period, t1, for this transmission may start with the transmission of ACK frame 2123. The time period, t1, for this transmission may start with the transmission of CTS frame 2124.

PPDU 2125 may be based on PPDU 2122. The data payload of PPDU 2125 may be the same as the data payload of PPDU 2122. Station 1811 may receive an ACK frame 2126 from station 1812. Station 1811 may receive an ACK frame 2126 from station 1812, based on (e.g., in response to) PPDU 2125.

Station 1812, on receiving MRTT frame 2120 in example 2100, may determine that it is being triggered by MRTT frame 2120 to send (e.g., transmit) a downlink frame (to be received from station 1811) to station 2113 during the second time period (t2). Station 1812 may make this determination based on the first indication, the second indication, and/or the order of the first user info field, the second user info field and the third user info field in the user info field list of MRTT frame 2120. Station 1812 may determine that it is to relay a downlink frame transmission to station 2113, where it is to receive the downlink frame transmission from station 1811. Station 1812 may determine that it is to relay a downlink frame transmission to station 2113, where it is to receive the downlink frame transmission from station 1811, for example, based on the second indication and the presence of its AID12 address in the second occurring user info field in the user info field list of MRTT frame 2120 (the second user info field). Station 1812 may determine that the downlink frame transmission is to be relayed to station 2113. Station 1812 may determine that the downlink frame transmission is to be relayed to station 2113, for example, based on the first indication and the presence of the AID12 address of station 2113 in the third occurring user info field in the user info field list (the third user info field).

Station 1812 may send (e.g., transmit) a CTS frame 2127 at the beginning of the second time period (t2) before sending (e.g., transmitting) a PPDU 2128 to station 2113 and after receiving PPDU 2125 from station 1811. Station 1811 may not send (e.g., transmit) a CTS frame before sending (e.g., transmitting) PPDU 2128 to station 2113. Station 1812 may send (e.g., transmit) a CTS frame. Station 1812 may send (e.g., transmit) a CTS frame, for example, based on (e.g., in response to) MRTT frame 2120 (not shown in FIG. 21). The duration field of the CTS frame may indicate the end of the time second time period (t2). Station 1812 may send (e.g., transmit) a CTS frame at the beginning of the first time period (t1) (not shown in FIG. 21). The duration field of the CTS frame may indicate the end of the second time period (t2). The time period, t2, for this transmission may start with the transmission of ACK frame 2126. The time period, t2, for this transmission may start with the transmission of CTS frame 2127.

PPDU 2128 may be based on PPDU 2125. The data payload of PPDU 2128 may be the same as the data payload of PPDU 2125. Station 1811 may receive an ACK frame 2129 from station 2113. Station 1811 may receive an ACK frame 2129 from station 2113, for example, based on (e.g., in response to) PPDU 2128. ACK frames 2123, 2126 and 2129 may be block ACK (BA) frames.

Station 2113, on receiving MRTT frame 2120 in example 2100, may determine that it is to receive a downlink frame from AP 1810 via stations 1811 and 1812, and that it is the destination station of the downlink frame. Station 2113 may make this determination based on the first indication, the second indication, and/or the order of the first user info field, the second user info field and the third user info field in the user info field list of MRTT frame 2120. Station 2113 may determine that it is to receive a downlink frame destined to itself. Station 2113 may determine that it is to receive a downlink frame destined to itself, based on the second indication and the presence of its AID 12 address in the third occurring and last user info field in the user info field list of MRTT frame 2120 (the third user info field) (and/or the third time period allocated to station 2113 being equal to zero). Station 2113 may determine that the downlink frame is a relay frame to be received from station 1812 during the second time period (t2). Station 2113 may determine that the downlink frame is a relay frame to be received from station 1812 during the second time period (t2), for example, based on the first indication and the presence of the AID12 address of station 1812 in the second occurring user info field in the user info field list (the second user info field). Station 2113 may send (e.g., transmit) a CTS frame, for example, based on (e.g., in response to) MRTT frame 2120 (not shown in FIG. 21). The duration field of the CTS frame may indicate the end of the second time period (t2). Station 2113 may send (e.g., transmit) a CTS frame, after CTS frame 2121 sent (e.g., transmitted) by station 1811. Station 2113 may send (e.g., transmit) a CTS frame, after CTS frame 2121 sent (e.g., transmitted) by station 1811, for example, based on (e.g., in response to) MRTT frame 2120 (not shown in FIG. 21). The duration field of the CTS frame may indicate the end of the second time period (t2). Station 2113 may send (e.g., transmit) a CTS frame at the beginning of the first time period (t1) or the second time period (t2) (not shown in FIG. 21). The duration field of the CTS frame may indicate the end of the second time period (t2).

MRTT frame 2120, (shown as "Option b" in FIG. 21), may not comprise the third allocation and may only comprise the first allocation and the second allocation with the receiver addresses indicated. The first allocation and the second allocation may each further comprise an identifier of a receiver station. For example, the first allocation to station 1811 may comprise an identifier of station 1812 as a receiver station. This means that station 1811 should relay/send(e.g., transmit) the downlink frame to station 1812. The second allocation to station 1812 may comprise an identifier of station 2113 as a receiver station. This means that station 1812 may relay/send(e.g., transmit) the downlink frame to station 2113. The identification of station 2113 in the second allocation indicates that station 2113 is the destination station of the downlink frame. The identification of station 2113 in the second allocation indicates that station 2113 is the destination station of the downlink frame, for example, if the second allocation to station 1812 may be the last allocation in the list of allocations (e.g., user info fields) in MRTT frame 2120. An identifier of a receiver station may be provided in the reserved bits of the user info field as shown in FIG. 11. MRTT frame 2120 may further comprise a first indication that the first time period and the second time period are for a transmission between the AP and station 2113 via stations 1811 and 1812 (i.e., a relay transmission).

Station 1811, on receiving MRTT frame 2120 from AP 1810 in example 2100, may determine that it is being triggered by MRTT frame 2120 to send (e.g., transmit) a downlink frame (to be received from AP 1810) to station 1812 during the first time period (t1). Station 1811 may make this determination based on the first indication and/or the first user info field in the user info field list of MRTT frame 2120. Station 1811 may determine that it is to relay a downlink frame to station 1812 to be received from AP 1810. Station 1811 may determine that it is to relay a downlink frame to station 1812 to be received from AP 1810, for example, based on the first indication, the presence of its AID 12 address in the first user info field in the user info field list of MRTT frame 2120, and the presence of an identifier of station 1812 as a destination station in the first user info field in the user info field list of MRTT frame 2120.

Station 1811 may send (e.g., transmit) a CTS frame 2121. Station 1811 may send (e.g., transmit) a CTS frame 2121, for example, based on (e.g., in response to) MRTT frame 2120. The duration field of CTS frame 2121 may indicate the beginning of the first time period (t1). The duration field of CTS frame 2121 may indicate the end of the first time period (t1). The duration field of CTS frame 2121 may indicate the end of the second time period (t2). Station 1811 may then wait to receive the downlink frame from AP 1810. AP 1810, On receiving CTS frame 2121, may send (e.g., transmit) a PPDU 2122 to station 1811. Station 1811 may send (e.g., transmit) an ACK frame 2123 to AP 1810. station 1811 may not send (e.g., transmit) an ACK frame if an implicit ACK procedure is used. Station 1811 may send (e.g., transmit) an ACK frame 2123 to AP 1810. station 1811 may not send (e.g., transmit) an ACK frame if an implicit ACK procedure is used, for example, based on (e.g., in response to) PPDU 2122.

Station 1811 may send (e.g., transmit) a CTS frame 2124 at the beginning of the first time period (t1) before sending (e.g., transmitting) a PPDU 2125 to station 1812 and after receiving PPDU 2122 from AP 1810. Station 1811 may not send (e.g., transmit) a CTS frame before sending (e.g., transmitting) PPDU 2125 to station 1812. The time period, t1, for this transmission may start with the transmission of ACK frame 2123. The time period, t1, for this transmission may start with the transmission of CTS frame 2124.

PPDU 2125 may be based on PPDU 2122. The data payload of PPDU 2125 may be the same as the data payload of PPDU 2122. Station 1811 may receive an ACK frame 2126 from station 1812. Station 1811 may receive an ACK frame 2126 from station 1812, for example, based on (e.g., in response to) PPDU 2125.

Station 1812, on receiving MRTT frame 2120 from AP 1810 in example 2100, may determine that it is being triggered by MRTT frame 2120 to send (e.g., transmit) a downlink frame (to be received from station 1811) to station 2113 during the second time period (t2). Station 1812 may make this determination based on the first indication and/or the second user info field in the user info field list of MRTT frame 2120. Station 1812 may determine that it is to relay a downlink frame to station 2113 to be received from station 1811. Station 1812 may determine that it is to relay a downlink frame to station 2113 to be received from station 1811, for example, based on the first indication, the presence of its AID12 address in the second user info field in the user info field list of MRTT frame 2120, and the presence of an identifier of station 2113 as a destination station in the second user info field in the user info field list of MRTT frame 2120.

Station 1812 may send (e.g., transmit) a CTS frame 2127 at the beginning of the second time period (t2) before sending (e.g., transmitting) a PPDU 2128 to station 2113 and after receiving PPDU 2125 from station 1811. Station 1812 may not send (e.g., transmit) a CTS frame before sending (e.g., transmitting) PPDU 2128 to station 2113. Station 1812 may send (e.g., transmit) a CTS frame, for example, based on (e.g., in response to) MRTT frame 2120 (not shown in FIG. 21). The duration field of the CTS frame may indicate the end of the time second time period (t2). Station 1812 may send (e.g., transmit) a CTS frame at the beginning of the first time period (t1) (not shown in FIG. 21). The duration field of the CTS frame may indicate the end of the second time period (t2). The time period, t2, for this transmission may start with the transmission of ACK frame 2126. The time period, t2, for this transmission may start with the transmission of CTS frame 2127.

PPDU 2128 may be based on PPDU 2125. The data payload of PPDU 2128 may be the same as the data payload of PPDU 2125. Station 1812 may receive an ACK frame 2129 from station 2113. Station 1812 may receive an ACK frame 2129 from station 2113, for example, based on (e.g., in response to) PPDU 2128. ACK frames 2123, 2126 and 2129 may be block ACK (BA) frames.

Stations 1811, 1812 and 2113, in the TXS-based relaying procedure of FIG. 21, may obtain from MRTT frame 2120 all information necessary to successfully relay and receive the downlink frame from AP 1810. No modification of PPDU 2122 to include relay information may be needed. The TXS-based relaying procedure, as shown in example 2100, may have been successfully extended to relaying operations with greater than two hops.

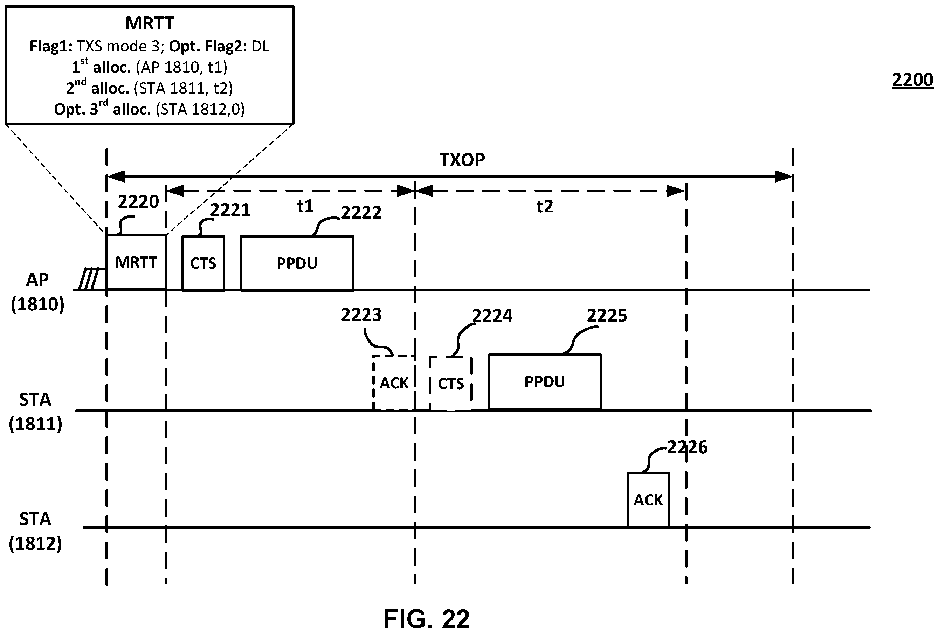

FIG. 22 shows another example 2200 of a TXS-based relaying procedure, which may be used for relaying downlink traffic from an AP to a station. Example 2200 may include an AP 1810 and a plurality of stations 1811 and 1812. Stations 1811 and 1812 may be associated with AP 1810. AP 1810, and stations 1811 and 1812 may be within communication range of each other. Station 1811 may receive data frames from AP 1810 destined to itself. Station 1811 may serve as a relay for station 1812. AP 1810 may prefer to send (e.g., transmit) a PPDU to station 1812 via station 1811 in order to increase the throughput in a downlink transmission. AP 1810 may prefer to receive a PPDU from station 1812 via station 1811 in order to increase the throughput in an uplink transmission.

The procedure, as shown in FIG. 22, may begin with AP 1810 sending (e.g., transmitting) an MRTT frame 2220 after obtaining a TXOP. MRTT frame 2220 may comprise a plurality of allocations for a plurality of respective stations. An allocation of MRTT frame 2220 may comprise an identifier of a station, a time period (of the TXOP) allocated to the station, and/or a TXS mode for the allocated time period. The allocated station may be a non-AP station or an AP station. MRTT frame 2220, in example 2200, may comprise a first allocation for AP 1810, a second allocation for station 1811 and an optional third allocation for station 1812. The first allocation may comprise a first time period (denoted t1 in FIG. 22) of the TXOP. The second allocation may comprise a second time period (denoted t2 in FIG. 22) of the TXOP. The third allocation may comprise a third time period (denoted t3 in FIG. 22) of the TXOP. MRTT frame 2220 may further comprise a first indication that the first time period and the second time period are for a transmission between the AP and station 1812 via station 1811 (i.e., a relay transmission). The third time period (t3) allocated to station 1812 may be equal to zero.

The plurality of allocations of MRTT frame 2220 may be provided in a user info field list comprising a plurality of user info fields. Each user info field corresponds to a respective allocation and to a respective station of the allocated stations. For example, MRTT frame 2220 may comprise a first user info field comprising the first allocation for AP 1810, a second user info field comprising the second allocation for station 1811, and a third user info field comprising the third allocation for station 1812. The first time period may be indicated in an allocation duration subfield of the first user info field. The second time period may be indicated in an allocation duration subfield of the second user info field. The third time period may be indicated in an allocation duration subfield of the third user info field.

The order of the user info fields in the user info field list may correspond to the order in time of the allocated time periods. For example, as shown in FIG. 22, the first user info field comprising the first allocation comprising the first period may precede, in the user info field list, the second user info field comprising the second allocation comprising the second time period, where the first time period (t1) precedes the second time period (t2) in time. The second time period may be a short inter-frame space (SIFS) after the first time period. The second time period (t2) may precede the third time period (t3) in time. The second user info field comprising the second allocation comprising the second period may precede, in the user info field list, the third user info field comprising the third allocation comprising the third time period. The third time period may be a SIFS after the second time period.

An allocation of MRTT frame 2220 may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, if TXS mode is present in the user info field. MRTT frame 2220 may not include a TXS mode in the first allocation for AP 1810.

The first indication may be provided in a TXS mode subfield of MRTT frame 2220. The TXS mode subfield may be provided in a common info field of MRTT frame 2220. The TXS mode subfield may be set to 3. The TXS mode being equal to 3 may indicate to stations 1811 and 1812 that the allocated time portions are to be used for a relaying operation.

MRTT frame 2220 may further comprise a second indication of whether the transmission between AP 1810 and station 1812 is an uplink transmission or a downlink transmission. The first user info field comprising the first time period may precede, in the user info field list in MRTT frame 2220, the second user info field comprising the second time period, where the second indication indicates that the transmission is a downlink transmission. The first user info field comprising the first time period may follow, in the user info field list in MRTT frame 2220, the second user info field comprising the second time period, where the second indication indicates that the transmission is an uplink transmission. MRTT frame 2220 may not comprise a second indication of whether the transmission between AP 1810 and station 1812 is an uplink transmission or a downlink transmission. The second indication may be provided in the common info field of MRTT frame 2220. The second indication may be provided in the common info field of MRTT frame 2220, for example, based on (e.g., in case) MRTT frame 2220 comprising the second indication. The second indication may be provided in one of the reserved bits (e.g., B22, B26, B53 or B63) of the common info field as shown in FIG. 12.

AP 1810 in example 2200 may send (e.g., transmit) a CTS frame 2221 (for the other stations to set their NAVs) before sending (e.g., transmitting) PPDU 2222 to station 1811 and after sending (e.g., transmitting) MRTT frame 2220. The duration field of CTS frame 2221 may indicate the end of the first time period (t1). The duration field of CTS frame 2221 may indicate the end of the second time period (t2). Station 1811 may send (e.g., transmit) a CTS frame (not shown in FIG. 22) after receiving MRTT frame 2220 to indicate it is ready to receive PPDU 2222 from AP 1810. The duration field of the CTS frame sent (e.g., transmitted) by station 1811 may indicate the end of the first time period (t1). The duration field of the CTS frame sent (e.g., transmitted) by station 1811 may indicate the end of the second time period (t2). The time period, t1, for this transmission may start with the transmission of MRTT frame 2220.

Station 1811, on receiving MRTT frame 2220 in example 2200, may determine that it is being requested by MRTT frame 2220 to receive a downlink frame from AP 1810 during the first time period (t1) and to relay the downlink frame to station 1812 during the second time period (t2). Station 1811 may make this determination based on the first indication, the second indication, and/or the order of the first user info field and the second user info field in the user info field list of MRTT frame 2220. Station 1811 may determine that it is to receive a downlink frame from AP 1810. Station 1811 may determine that it is to receive a downlink frame from AP 1810, for example, based on the second indication, the presence of an identifier of AP 1810 in the first occurring user info field in the user info field list of MRTT frame 2220, and the presence of its AID12 address in the second occurring user info field in the user info field list of MRTT frame 2220 (the second user info field). Station 1811 may determine that it is to relay the downlink frame to station 1812. Station 1811 may determine that it is to relay the downlink frame to station 1812, for example, based on the first indication, the presence of its AID 12 address in the second occurring user info field in the user info field list of MRTT frame 2220, and the presence of the AID12 address of station 1812 in the third occurring user info field in the user info field list (the third user info field).

Station 1811 may send (e.g., transmit) an ACK frame 2223 to AP 1810. Station 1811 may send (e.g., transmit) an ACK frame 2223 to AP 1810, for example, based on (e.g., in response to) PPDU 2222. Station 1811 may not send (e.g., transmit) an ACK frame if an implicit ACK procedure is used.

Station 1811 may send (e.g., transmit) a CTS frame 2224 at the beginning of the second time period (t2) before sending (e.g., transmitting) a PPDU 2225 to station 1812 and after receiving PPDU 2222 from AP 1810. Station 1811 may not send (e.g., transmit) a CTS frame before sending (e.g., transmitting) PPDU 2225 to station 1812. The time period, t2, for this transmission may start with the transmission of ACK frame 2223. The time period, t2, for this transmission may start with the transmission of CTS frame 2224.

PPDU 2225 may be based on PPDU 2222. The data payload of PPDU 2225 may be the same as the data payload of PPDU 2222. Station 1811 may receive an ACK frame 2226 from station 1812. Station 1811 may receive an ACK frame 2226 from station 1812, for example, based on (e.g., in response to) PPDU 2225. ACK frames 2223 and 2226 may be block ACK (BA) frames.

Station 1812, on receiving MRTT frame 2220 in example 2200, may determine that it is to receive a downlink frame from AP 1810 via station 1811 and that it is the destination station. Station 1812 may make this determination based on the first indication, the second indication, and/or the order of the first user info field, the second user info field, and third user info field in the user info field list of MRTT frame 2220. Station 1812 may determine that it is to receive a downlink frame destined to itself during the second time period (t2). Station 1812 may determine that it is to receive a downlink frame destined to itself during the second time period (t2), for example, based on the second indication and the presence of its AID12 address in the third occurring and last user info field in the user info field list of MRTT frame 2220 (the third user info field). Station 1812 may determine that the downlink frame is a relay frame to be received from station 1811. Station 1812 may determine that the downlink frame is a relay frame to be received from station 1811, for example, based on the first indication and the presence of the AID12 address of station 1811 in the second occurring user info field in the user info field list (the second user info field). Station 1812 may send (e.g., transmit) a CTS frame. Station 1812 may send (e.g., transmit) a CTS frame, for example, based on (e.g., in response to) MRTT frame 2220 (not shown in FIG. 22). The duration field of the CTS frame may indicate the end of the second time period (t2). Station 1812 may send (e.g., transmit) a CTS frame, after CTS frame 2221 sent (e.g., transmitted) by AP 1810. Station 1812 may send (e.g., transmit) a CTS frame, after CTS frame 2221 sent (e.g., transmitted) by AP 1810, based on (e.g., in response to) MRTT frame 2220 (not shown in FIG. 22). The duration field of the CTS frame may indicate the end of the second time period (t2). Station 1812 may send (e.g., transmit) a CTS frame at the beginning of the second time period (t2) (not shown in FIG. 22). The duration field of the CTS frame may indicate the end of the second time period (t2).

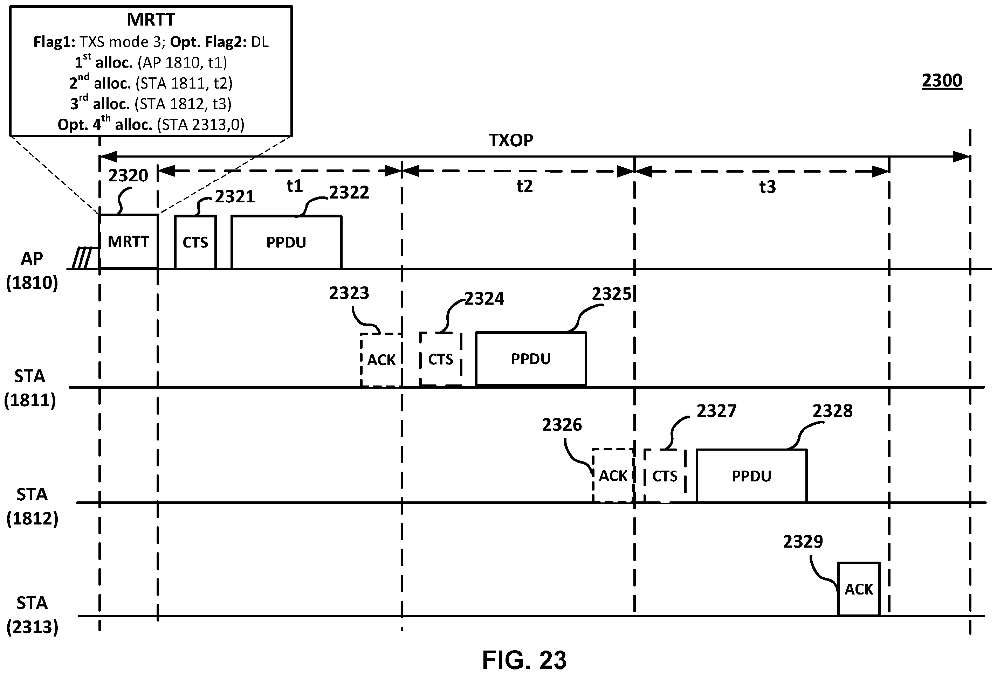

Stations 1811 and 1812, in the TXS-based relaying procedure of FIG. 22, can obtain from MRTT frame 2220 all information necessary to successfully relay and receive the downlink frame from AP 1810. No modification of PPDU 2222 to include relay information may be needed. The TXS-based relaying procedure of FIG. 22, as shown in example 2200, may use multiple station allocations for the downlink transmission. The TXS-based relaying procedure of FIG. 22, as described below with reference to FIG. 23, may be readily extended to relaying operations with greater than two hops.

FIG. 23 shows another example 2300 of a TXS-based relaying procedure, which may be used for relaying downlink traffic from an AP to a station. Example 2300 may include an AP 1810 and a plurality of stations 1811, 1812 and 2313. Stations 1811, 1812 and 2313 may be associated with AP 1810. AP 1810, and stations 1811, 1812 and 2313 may be within communication range of each other. Stations 1811 and 1812 may receive data frames from AP 1810 destined to themselves. Stations 1811 and 1812 may serve as relays for station 2313. AP 1810 may prefer to send (e.g., transmit) a PPDU to station 2313 via stations 1811 and 1812 in order to increase the throughput in a downlink transmission. AP 1810 may prefer to receive a PPDU from station 2313 via stations 1811 and 1812 in order to increase the throughput in an uplink transmission.

The procedure, as shown in FIG. 23, may begin with AP 1810 sending (e.g., transmitting) an MRTT frame 2320 after obtaining a TXOP. MRTT frame 2320 may comprise a plurality of allocations for a plurality of respective stations. An allocation of MRTT frame 2320 may comprise an identifier of a station, a time period (of the TXOP) allocated to the station, and/or a TXS mode for the allocated time period. The allocated station may be a non-AP station or an AP station. MRTT frame 2320 in example 2300 may comprise a first allocation for AP 1810, a second allocation for station 1811, a third allocation for station 1812 and an optional fourth allocation for station 2313. The first allocation may comprise a first time period (denoted t1 in FIG. 23) of the TXOP. The second allocation may comprise a second time period (denoted t2 in FIG. 23) of the TXOP. The third allocation may comprise a third time period (denoted t3 in FIG. 23) of the TXOP. The fourth allocation may comprise a fourth time period (denoted t4 in FIG. 23) of the TXOP. MRTT frame 2220 may further comprise a first indication that the first time period, the second time period and the third time period are for a transmission between the AP and station 2313 via stations 1811 and 1812 (i.e., a relay transmission). The fourth time period (t4) allocated to station 2313 may be equal to zero.

The plurality of allocations of MRTT frame 2320 may be provided in a user info field list comprising a plurality of user info fields. Each user info field may correspond to a respective allocation and to a respective station of the allocated stations. For example, MRTT frame 2320 may comprise a first user info field comprising the first allocation for AP 1810, a second user info field comprising the second allocation for station 1811, a third user info field comprising the third allocation for station 1812 and a fourth user info field comprising the fourth allocation for station 2313. The first time period may be indicated in an allocation duration subfield of the first user info field. The second time period may be indicated in an allocation duration subfield of the second user info field. The third time period may be indicated in an allocation duration subfield of the third user info field. The fourth time period may be indicated in an allocation duration subfield of the fourth user info field.

The order of the user info fields in the user info field list may correspond to the order in time of the allocated time periods. For example, as shown in FIG. 23, the first user info field comprising the first allocation comprising the first period may precede, in the user info field list, the second user info field comprising the second allocation comprising the second time period, where the first time period (t1) precedes the second time period (t2) in time. The second time period may be a short inter-frame space (SIFS) after the first time period. The second time period (t2) may precede the third time period (t3) in time, the second user info field comprising the second allocation comprising the second period may precede, in the user info field list, the third user info field comprising the third allocation comprising the third time period. The third time period may be a SIFS after the second time period. The third time period (t3) precedes the fourth time period (t4) in time, the third user info field comprising the third allocation comprising the third period may precede, in the user info field list, the fourth user info field comprising the fourth allocation comprising the fourth time period. The fourth time period may be a SIFS after the third time period.

As mentioned herein, an allocation of MRTT frame 2320 may include a TXS mode for the station corresponding to the allocation. TXS mode may be set to 1 for transmission to the AP or may be set to 2 for transmission to a station. TXS mode may be set to 1 for transmission to the AP or may be set to 2 for transmission to a station, for example, if TXS mode is present in the user info field. MRTT frame 2320 may not include a TXS mode in the first allocation for AP 1810.

The first indication may be provided in a TXS mode subfield of MRTT frame 2320. The TXS mode subfield may be provided in a common info field of MRTT frame 2320. The TXS mode subfield may be set to 3. The TXS mode being equal to 3 may indicate to stations 1811, 1812 and 2313 that the allocated time portions are to be used for a relaying operation.

MRTT frame 2320 may further comprise a second indication of whether the transmission between AP 1810 and station 2313 is an uplink transmission or a downlink transmission. The first user info field comprising the first time period may precede, in the user info field list in MRTT frame 2320, the second user info field comprising the second time period and the second user info field comprising the second time period may precede, in the user info field list in MRTT frame 2320, the third user info field comprising the third time period, where the second indication indicates that the transmission is a downlink transmission. The first user info field comprising the first time period may follow, in the user info field list in MRTT frame 2320, the second user info field comprising the second time period and the second user info field comprising the second time period may follow, in the user info field list in MRTT frame 2320, the third user info field comprising the third time period, where the second indication indicates that the transmission is an uplink transmission. MRTT frame 2320 may not comprise a second indication of whether the transmission between AP 1810 and station 2313 is an uplink transmission or a downlink transmission. The second indication may be provided in the common info field of MRTT frame 2320. The second indication may be provided in the common info field of MRTT frame 2320, for example, based on (e.g., in case) MRTT frame 2320 comprising the second indication. The second indication may be provided in one of the reserved bits (e.g., B22, B26, B53 or B63) of the common info field as shown in FIG. 12.

AP 1810 in example 2300 may send (e.g., transmit) a CTS frame 2321 (for the other stations to set their NAVs) before sending (e.g., transmitting) PPDU 2322 to station 1811 and after sending (e.g., transmitting) MRTT frame 2320. The duration field of CTS frame 2321 may indicate the end of the first time period (t1). The duration field of CTS frame 2321 may indicate the end of the second time period (t2) or the third time period (t3). Station 1811 may send (e.g., transmit) a CTS frame (not shown in FIG. 23) after receiving MRTT frame 2320 to indicate it is ready to receive PPDU 2322 from AP 1810. The duration field of that CTS frame may indicate the end of the first time period (t1). The duration field of that CTS frame may indicate the end of the second time period (t2) or the third time period (t3). The time period, t1, for this transmission may start with the transmission of MRTT frame 2320.

Station 1811, on receiving MRTT frame 2320 in example 2300, may determine that it is being requested by MRTT frame 2320 to receive a downlink frame from AP 1810 during the first time period (t1) and to relay the downlink frame to station 1812 during the second time period (t2). Station 1811 may make this determination based on the first indication, the second indication, and/or the order of the first user info field, the second user info field and the third user info field in the user info field list of MRTT frame 2320. Station 1811 may determine that it is to receive a downlink frame from AP 1810, based on the second indication, the presence of an identifier of AP 1810 in the first occurring user info field in the user info field list of MRTT frame 2320, and the presence of its AID12 address in the second occurring user info field in the user info field list of MRTT frame 2320 (the second user info field). Station 1811 may determine that it is to relay the downlink frame to station 1812, based on the first indication, the presence of its AID 12 address in the second occurring user info field in the user info field list of MRTT frame 2320, and the presence of the AID12 address of station 1812 in the third occurring user info field in the user info field list (the third user info field).

Station 1811 may send (e.g., transmit) an ACK frame 2323 to AP 1810. Station 1811 may send (e.g., transmit) an ACK frame 2323 to AP 1810, for example, based on (e.g., in response to) PPDU 2322. Station 1811 may not send (e.g., transmit) an ACK frame if an implicit ACK procedure is used.

Station 1811 may send (e.g., transmit) a CTS frame 2324 at the beginning of the second time period (t2) before sending (e.g., transmitting) a PPDU 2325 to station 1812 and after receiving PPDU 2322 from AP 1810. Station 1811 may not send (e.g., transmit) a CTS frame before sending (e.g., transmitting) PPDU 2325 to station 1812. The time period, t2, for this transmission may start with the transmission of ACK frame 2323. The time period, t2, for this transmission may start with the transmission of CTS frame 2324.

PPDU 2325 may be based on PPDU 2322. The data payload of PPDU 2325 may be the same as the data payload of PPDU 2322. Station 1811 may receive an ACK frame 2326 from station 1812. Station 1811 may receive an ACK frame 2326 from station 1812, for example, based on (e.g., in response to) PPDU 2325. Station 1811 may not receive an ACK frame if an implicit ACK procedure is used.

Station 1812, on receiving MRTT frame 2320 in example 2300, may determine that it is being requested by MRTT frame 2320 to receive a downlink frame from station 1811 during the second time period (t2) and to relay the downlink frame to station 2313 during the third time period (t3). Station 1812 may make this determination based on the first indication, the second indication, and/or the order of the second user info field, the third user info field and the fourth user info field in the user info field list of MRTT frame 2320. Station 1812 may determine that it is to receive a downlink frame from station 1811, based on the second indication, the presence of an identifier of station 1811 in the second occurring user info field in the user info field list of MRTT frame 2320, and the presence of its AID12 address in the third occurring user info field in the user info field list of MRTT frame 2320 (the third user info field). Station 1812 may determine that it is to relay the downlink frame to station 2313, based on the first indication, the presence of its AID12 address in the third occurring user info field in the user info field list of MRTT frame 2320, and the presence of the AID12 address of station 2313 in the fourth occurring user info field in the user info field list (the fourth user info field).

Station 1812 may send (e.g., transmit) a CTS frame 2327 at the beginning of the third time period (t3) before sending (e.g., transmitting) a PPDU 2328 to station 2313 and after receiving PPDU 2325 from station 1811. Station 1812 may not send (e.g., transmit) a CTS frame before sending (e.g., transmitting) PPDU 2328 to station 2313. Station 1812 may send (e.g., transmit) a CTS frame in response to MRTT frame 2320 (not shown in FIG. 23). The duration field of the CTS frame may indicate the end of the second time period (t2) or the third time period (t3). Station 1812 may send (e.g., transmit) a CTS frame, after CTS frame 2321 sent (e.g., transmitted) by AP 1810. Station 1812 may send (e.g., transmit) a CTS frame, after CTS frame 2321 sent (e.g., transmitted) by AP 1810, for example, based on (e.g., in response to) MRTT frame 2320 (not shown in FIG. 23). The duration field of the CTS frame may indicate the end of the second time period (t2) or the third time period (t3). Station 1812 may send (e.g., transmit) a CTS frame at the beginning of the second time period (t2) (not shown in FIG. 23). The duration field of the CTS frame may indicate the end of the second time period (t2) or the third time period (t3). the time period, t3, for this transmission may start with the transmission of ACK frame 2326. The time period, t3, for this transmission may start with the transmission of CTS frame 2327.

PPDU 2328 may be based on PPDU 2325. The data payload of PPDU 2328 may be the same as the data payload of PPDU 2325. Station 1812 may receive an ACK frame 2329 from station 2313. Station 1812 may receive an ACK frame 2329 from station 2313, for example, based on (e.g., in response to) PPDU 2328. ACK frames 2323, 2326 and 2329 may be block ACK (BA) frames.

Station 2313, on receiving MRTT frame 2320 in example 2300, may determine that it is to receive a downlink frame from AP 1810 via stations 1811 and 1812 and that it is the destination station. Station 2313 may make this determination based on the first indication, the second indication, and/or the order of the first user info field, the second user info field, the third user info field and the fourth user info field in the user info field list of MRTT frame 2320. Station 2313 may determine that it is to receive a downlink frame destined to itself during the third time period (t3). Station 2313 may determine that it is to receive a downlink frame destined to itself during the third time period (t3), for example, based on the second indication and the presence of its AID12 address in the fourth occurring and last user info field in the user info field list of MRTT frame 2320 (the fourth user info field). Station 2313 may determine that the downlink frame is a relay frame to be received from station 1812. Station 2313 may determine that the downlink frame is a relay frame to be received from station 1812, for example, based on the first indication and the presence of the AID12 address of station 1812 in the third occurring user info field in the user info field list (the third user info field). Station 2313 may send (e.g., transmit) a CTS frame. Station 2313 may send (e.g., transmit) a CTS frame. Station 2313 may send (e.g., transmit) a CTS frame, for example, based on (e.g., in response to) MRTT frame 2320 (not shown in FIG. 23). The duration field of the CTS frame may indicate the end of the third time period (t3). Station 2313 may send (e.g., transmit) a CTS frame, after CTS frame 2321 sent (e.g., transmitted) by AP 1810. Station 2313 may send (e.g., transmit) a CTS frame, after CTS frame 2321 sent (e.g., transmitted) by AP 1810, for example, based on (e.g., in response to) MRTT frame 2320 (not shown in FIG. 23). The duration field of the CTS frame may indicate the end of the third time period (t3). Station 2313 may send (e.g., transmit) a CTS frame at the beginning of the second time period (t2) (not shown in FIG. 23). The duration field of the CTS frame may indicate the end of the third time period (t3). Station 2313 may send (e.g., transmit) a CTS frame at the beginning of the third time period (t3) (not shown in FIG. 23). The duration field of the CTS frame may indicate the end of the third time period (t3).

As described herein, stations 1811, 1812 and 2313, in the TXS-based relaying procedure of FIG. 23, may obtain from MRTT frame 2320 all information necessary to successfully relay and receive the downlink frame from AP 1810. No modification of PPDU 2322 to include relay information may be needed. Further, as shown in example 2300, the TXS-based relaying procedure may have been successfully extended to relaying operations with greater than two hops.

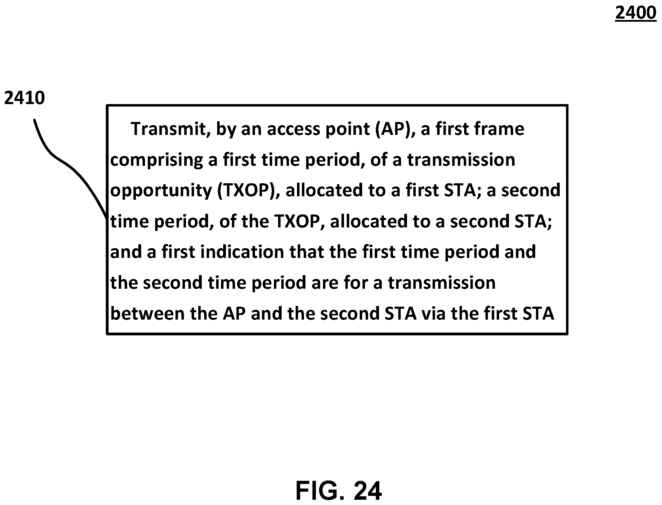

FIG. 24 shows an example process 2400 of a TXS-based relaying procedure. Example process 2400 is provided for the purpose of illustration only and is not limiting. Example process 2400 may be performed by an AP, such as AP 1810, for example, in the context of a relaying procedure.

Process 2400, as shown in FIG. 24, may include, in step 2410, sending (e.g., transmitting), by an AP, a first frame comprising a first time period, of a TXOP, allocated to a first station; a second time period, of the TXOP, allocated to a second station; and a first indication that the first time period and the second time period are for a transmission between the AP and the second station via the first station.

Process 2400 may further comprise receiving, by the AP from the first station, a second frame during the first time period. The first time period may be after the second time period. The first time period may be a short inter-frame space (SIFS) after the second time period. The first station may receive a third frame from the second station during the second time period, where the second frame is based on the third frame.

The first frame may further comprise a third time period of the TXOP allocated to a third station, the third time period being before the second time period. the second station may receive a fourth frame from the third station during the third time period, where the third frame is based on the fourth frame. The first indication may further indicate that the first time period, The second time period, and the third time period may be for a transmission between the AP and the third station via the first station and the second station.

Process 2400 may further comprise sending (e.g., transmitting), by the AP to the first station, a second frame before the first time period. The first time period may be before the second time period. The second time period may be a SIFS after the first time period.

The first station may send (e.g., transmit) to the second station a third frame during the first time period, where the third frame is based on the second frame. The second time period may have a duration of zero, where the duration of zero of the second time period may indicate that the second station is a destination station of the transmission.

The first station may send (e.g., transmit) to the second station a third frame during the first time period, where the third frame is based on the second frame. The first frame may further comprise a third time period, of the TXOP, allocated to a third station, the third time period being after the second time period. The duration of zero of the third time period may indicate that the third station is a destination station of the transmission. The third station may receive a fourth frame from the second station during the second time period, where the fourth frame is based on the third frame. The first indication may further indicate that the first time period, the second time period, and the third time period are for a transmission between the AP and the third station via the first station and the second station.

The first frame may further comprise a second indication of whether the second frame is an uplink transmission or a downlink transmission. The first indication may be provided by a triggered TXOP sharing (TXS) mode indicated by the first frame. The first frame may comprise a multi-user request-to-send triggered TXOP sharing (MU-RTS TXS) trigger (MRTT) frame, where the first indication may be provided in a TXS mode subfield of the MRTT frame. The TXS mode subfield may be provided in a common info field of the MRTT frame, where the TXS mode subfield may be set to 3. The second indication may be provided in the common info field of the MRTT frame. The second frame, the third frame and the fourth frame may be physical layer protocol data units (PPDUs).

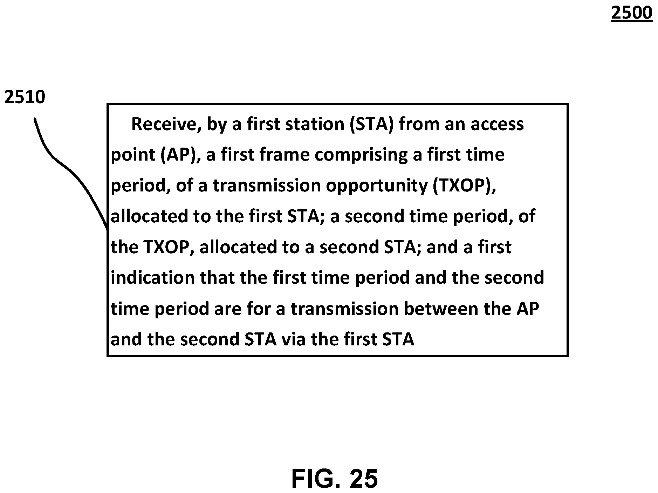

FIG. 25 shows another example process 2500 of a TXS-based relaying procedure. Example process 2500 is provided for the purpose of illustration only and is not limiting. Example process 2500 may be performed by a first station, such as station 1811, for example, in the context of a relaying procedure.

Process 2500, as shown in FIG. 25, may include, in step 2510, receiving, by a first station, a first frame comprising a first time period of a TXOP allocated to a first station; a second time period of the TXOP allocated to a second station; and a first indication that the first time period and the second time period may be for a transmission between the AP and the second station via the first station.

Process 2500 may further comprise receiving, by the first station from the second station, a second frame during the second time period, and sending (e.g., transmitting), by the first station to the AP, a third frame during the first time period. The third frame may be based on the second frame. The first time period may be after the second time period. The first time period may be a short inter-frame space (SIFS) after the second time period.

The first frame may further comprise a third time period of the TXOP allocated to a third station, the third time period being before the second time period. The second station may receive a fourth frame from the third station during the third time period, where the second frame is based on the fourth frame. The first indication may further indicate that the first time period, the second time period, and the third time period are for a transmission between the AP and the third station via the first station and the second station.

Process 2500 may further comprise receiving, by the first station from the AP, a second frame before the first time period, and sending (e.g., transmitting), by the first station to the second station, a third frame during the first time period, where the third frame is based on the second frame. Process 2500 may further comprise sending (e.g., transmitting), by the first station to the second station, the third frame after sending (e.g., transmitting) an acknowledgement (ACK) frame or a clear-to-send (CTS) frame to the AP. The first time period may be before the second time period. The second time period may be a SIFS after the first time period. The second time period may have a duration of zero, where the duration of zero of the second time period may indicate that the second station is a destination station of the transmission.

The second time period may be a SIFS after the first time period, where the second time period is not zero duration. The first frame may further comprise a third time period of the TXOP allocated to a third station, the third time period being after the second time period. The duration of zero of the third time period may indicate that the third station is a destination station of the transmission. The third station may receive a fourth frame from the second station during the second time period, where the fourth frame is based on the third frame. The first indication may further indicate that the first time period, the second time period, and the third time period are for a transmission between the AP and the third station via the first station and the second station.

The first frame may further comprise a second indication of whether the second frame is an uplink transmission or a downlink transmission. The second indication may indicate that the transmission is a downlink transmission, where a first user info field comprising the first time period precedes in the first frame a second user info field comprising the second time period. The second indication may indicate that the transmission is an uplink transmission, where a first user info field comprising the first time period follows in the first frame a second user info field comprising the second time period. The first indication may be provided by a triggered TXOP sharing (TXS) mode indicated by the first frame. The first frame may comprise a multi-user request-to-send triggered TXOP sharing (MU-RTS TXS) trigger (MRTT) frame, where the first indication may be provided in a TXS mode subfield of the MRTT frame. The TXS mode subfield may be provided in a common info field of the MRTT frame, where the TXS mode subfield may be set to 3. The second indication may be provided in the common info field of the MRTT frame. The second frame, the third frame and the fourth frame may be physical layer protocol data units (PPDUs).

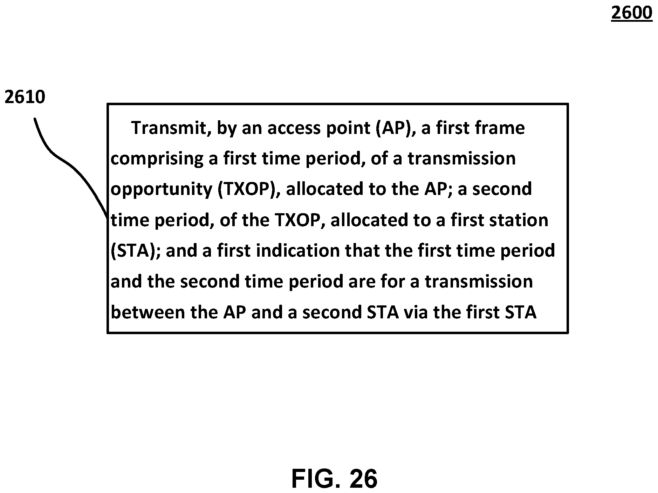

FIG. 26 shows another example process 2600 of a TXS-based relaying procedure. Example process 2600 is provided for the purpose of illustration only and is not limiting. Example process 2600 may be performed by an AP, such as AP 1810, for example, in the context of a relaying procedure.

Process 2600, as shown in FIG. 26, may include, in step 2610, sending (e.g., transmitting), by an AP, a first frame comprising a first time period of a TXOP allocated to the AP, a second time period of the TXOP allocated to a first station, and a first indication that the first time period and the second time period may be for a transmission between the AP and a second station via the first station.

Process 2600 may further comprise sending (e.g., transmitting), by the AP to the first station, a second frame during the first time period. The first time period may be before the second time period. The second time period may be a SIFS after the first time period. The first station may send (e.g., transmit) to the second station a third frame during the second time period, where the third frame is based on the second frame. The first frame further may further comprise a third time period of the TXOP allocated to the second station. The third time period may have a duration of zero, where the duration of zero of the third time period may indicate that the second station is a destination station of the transmission.

The first frame further may further comprise a third time period of the TXOP allocated to the second station, where the third time period may have a non-zero duration. The first frame may further comprise a fourth time period of the TXOP allocated to a third station, the fourth time period being after the third time period. The duration of zero of the fourth time period may indicate that the third station is a destination station of the transmission. The third station may receive a fourth frame from the second station during the third time period, where the fourth frame is based on the third frame. The first indication may further indicate that the first time period, the second time period, and the third time period are for a transmission between the AP and the third station via the first station and the second station.

The first frame may further comprise a second indication of whether the second frame is an uplink transmission or a downlink transmission. the second indication may indicate that the transmission is a downlink transmission, where a first user info field comprising the first time period precedes in the first frame a second user info field comprising the second time period. The first indication may be provided by a triggered TXOP sharing (TXS) mode indicated by the first frame. The first frame may comprise a multi-user request-to-send triggered TXOP sharing (MU-RTS TXS) trigger (MRTT) frame, where the first indication may be provided in a TXS mode subfield of the MRTT frame. The TXS mode subfield may be provided in a common info field of the MRTT frame, where the TXS mode subfield may be set to 3. The second indication may be provided in the common info field of the MRTT frame. The second frame, the third frame and the fourth frame may be physical layer protocol data units (PPDUs).

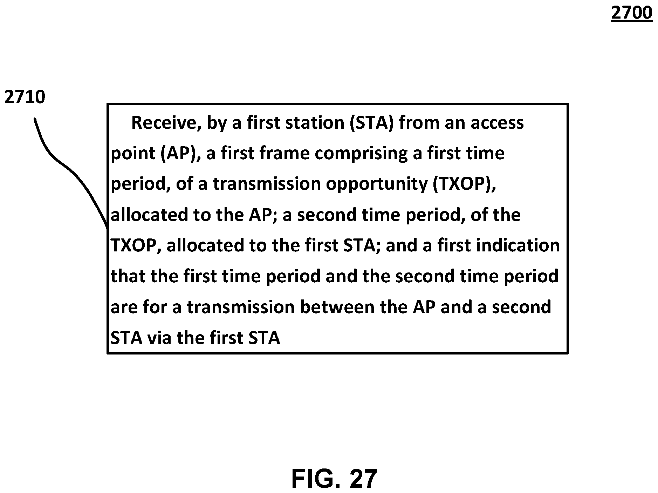

FIG. 27 shows another example process 2700 of a TXS-based relaying procedure. Example process 2700 is provided for the purpose of illustration only and is not limiting. Example process 2700 may be performed by a first station, such as station 1811, for example, in the context of a relaying procedure.

Process 2700 as shown in FIG. 27 may include, in step 2710, receiving, by a first station from an AP, a first frame comprising a first time period, of a TXOP, allocated to the AP, a second time period of the TXOP allocated to the first station, and a first indication that the first time period and the second time period may be for a transmission between the AP and a second station via the first station.

Process 2700 may further comprise receiving, by the first station from the AP, a second frame during the first time period, and sending (e.g., transmitting), by the first station to the second station, a third frame during the second time period, where the third frame is based on the second frame. Process 2700 may further comprise sending (e.g., transmitting), by the first station to the second station, the third frame after sending (e.g., transmitting) an acknowledgement (ACK) frame or a clear-to-send (CTS) frame to the AP. The first time period may be before the second time period. The second time period may be a SIFS after the first time period. The first frame further may further comprise a third time period of the TXOP allocated to the second station. The third time period may have a duration of zero, where the duration of zero of the third time period may indicate that the second station is a destination station of the transmission.

The first frame further may further comprise a third time period of the TXOP allocated to the second station, where the third time period may have a non-zero duration. The first frame may further comprise a fourth time period of the TXOP allocated to a third station, the fourth time period being after the third time period. The duration of zero of the fourth time period may indicate that the third station is a destination station of the transmission. The third station may receive a fourth frame from the second station during the third time period, where the fourth frame is based on the third frame. The first indication may further indicate that the first time period, the second time period, and the third time period are for a transmission between the AP and the third station via the first station and the second station.

The first frame may further comprise a second indication of whether the second frame is an uplink transmission or a downlink transmission. The second indication may indicate that the transmission is a downlink transmission, where a first user info field comprising the first time period precedes in the first frame a second user info field comprising the second time period. The first indication may be provided by a triggered TXOP sharing (TXS) mode indicated by the first frame. The first frame may comprise a multi-user request-to-send triggered TXOP sharing (MU-RTS TXS) trigger (MRTT) frame, where the first indication may be provided in a TXS mode subfield of the MRTT frame. The TXS mode subfield may be provided in a common info field of the MRTT frame, where the TXS mode subfield may be set to 3. The second indication may be provided in the common info field of the MRTT frame. The second frame, the third frame and the fourth frame may be physical layer protocol data units (PPDUs).

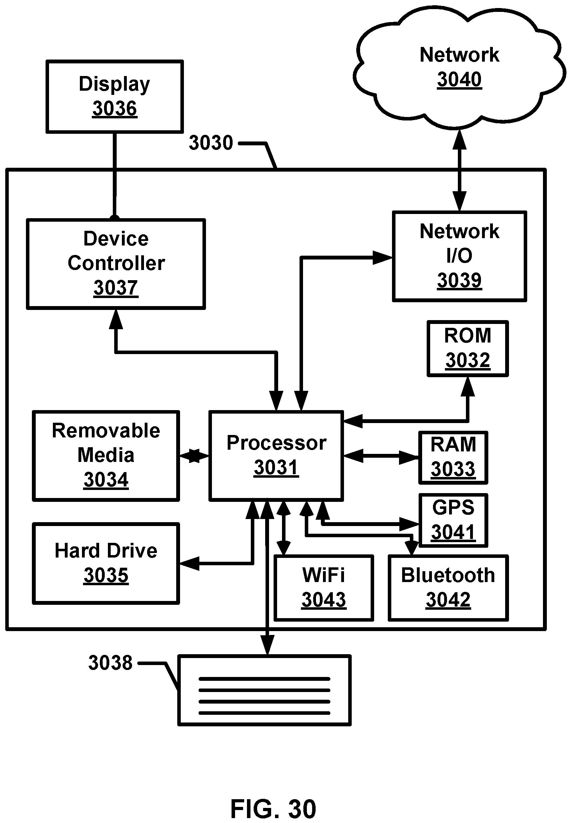

FIG. 30 shows example elements of a computing device that may be used to implement any of the various devices described herein, including, for example, a STA, an AP, communication devices, and/or any computing and/or communication device described herein. The computing device 3030 may comprise one or more processors 3031, which may execute instructions stored in the random-access memory (RAM) 3033, the removable media 3034 (such as a Universal Serial Bus (USB) drive, compact disk (CD) or digital versatile disk (DVD), or floppy disk drive), or any other desired storage medium. Instructions may also be stored in an attached (or internal) hard drive 3035. The computing device 3030 may also comprise a security processor (not shown), which may execute instructions of one or more computer programs to monitor the processes executing on the processor 3031 and any process that requests access to any hardware and/or software components of the computing device 3030 (e.g., ROM 3032, RAM 3033, the removable media 3034, the hard drive 3035, the device controller 3037, a network interface 3039, a GPS 3041, a Bluetooth interface 3042, a WiFi interface 3043, etc.). The computing device 3030 may comprise one or more output devices, such as the display 3036 (e.g., a screen, a display device, a monitor, a television, etc.), and may comprise one or more output device controllers 3037, such as a video processor. There may also be one or more user input devices 3038, such as a remote control, keyboard, mouse, touch screen, microphone, etc. The computing device 3030 may also comprise one or more network interfaces, such as a network interface 3039, which may be a wired interface, a wireless interface, or a combination of the two. The network interface 3039 may provide an interface for the computing device 3030 to communicate with a network 3040 (e.g., a RAN, or any other network). The network interface 3039 may comprise a modem (e.g., a cable modem), and the external network 3040 may comprise communication links, an external network, an in-home network, a provider's wireless, coaxial, fiber, or hybrid fiber/coaxial distribution system (e.g., a DOCSIS network), or any other desired network. Additionally, the computing device 3030 may comprise a location-detecting device, such as a global positioning system (GPS) microprocessor 3041, which may be configured to receive and process global positioning signals and determine, with possible assistance from an external server and antenna, a geographic position of the computing device 3030.

The example in FIG. 30 may be a hardware configuration, although the components shown may be implemented as software as well. Modifications may be made to add, remove, combine, divide, etc. components of the computing device 3030 as desired. Additionally, the components may be implemented using basic computing devices and components, and the same components (e.g., processor 3031, ROM storage 3032, display 3036, etc.) may be used to implement any of the other computing devices and components described herein. For example, the various components described herein may be implemented using computing devices having components such as a processor executing computer-executable instructions stored on a computer-readable medium, as shown in FIG. 30. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a first station from an access point, a first frame comprising: a first time period, of a transmission opportunity (TXOP), allocated to the first station; a second time period, of the TXOP, allocated to a second station; a first indication indicating that the first time period and the second time period are for a transmission between the access point and the second station via the first station; and a second indication indicating that the transmission is: a downlink transmission; or an uplink transmission.

Clause 2. The method of clause 1, further comprising: receiving, by the first station from the access point, a second frame during the first time period; and sending, by the first station to the second station, a third frame during the second time period.

Clause 3. The method of any one of clauses 1-2, further comprising: receiving, by the first station from the second station, a second frame during the second time period, and sending, by the first station to the access point, a third frame during the first time period.

Clause 4. The method of any one of clauses 1-3, further comprising: receiving, by the first station from the access point, a second frame before the first time period; sending, by the first station to the second station, a third frame during the first time period; and sending, by the first station to the second station, the third frame after sending an acknowledgement (ACK) frame or a clear-to-send (CTS) frame to the access point.

Clause 5. The method of any one of clauses 1-4, wherein: the first frame further comprises a third time period, of the TXOP, allocated to a third station; the third time period is before the second time period; and the third time period is configured for a reception, by the second station and from the third station, of a fourth frame.

Clause 6. The method of any one of clauses 1-5, wherein: the first frame further comprises a third time period, of the TXOP, allocated to a third station; the third time period is after the second time period; the third time period, with a duration of zero, indicates that the third station is a destination station of the transmission; and the second period is configured for a reception, by the third station and from the second station, of a fourth frame.

Clause 7. The method of any one of clauses 1-6, wherein: the second indication indicates that the transmission is a downlink transmission; and a first user info field comprising the first time period precedes, in the first frame, a second user info field comprising the second time period.

Clause 8. The method of any one of clauses 1-7, wherein: the second indication indicates that the transmission is an uplink transmission; and a first user info field comprising the first time period follows in the first frame a second user info field comprising the second time period.

Clause 9. The method of any one of clauses 1-8, wherein the first time period is after the second time period.

Clause 10. The method of any one of clauses 1-9, wherein the first time period is a short inter-frame space (SIFS) after the second time period.

Clause 11. The method of any one of clauses 1-10, wherein the first time period is before the second time period.

Clause 12. The method of any one of clauses 1-11, wherein the second time period is a short inter-frame space (SIFS) after the first time period.

Clause 13. The method of any one of clauses 1-12, wherein the second time period has a duration of zero; and the duration of zero of the second time period indicates that the second STA is a destination STA of the transmission.

Clause 14. The method of any one of clauses 1-13, wherein the first frame further comprises a second indication of whether the second frame is an uplink transmission or a downlink transmission.

Clause 15. The method of any one of clauses 1-14, wherein the first indication is provided by a triggered TXOP sharing (TXS) mode indicated by the first frame.

Clause 16. The method of any one of clauses 1-15, wherein the first frame comprises a multi-user request-to-send triggered TXOP sharing (MU-RTS TXS) trigger (MRTT) frame, and wherein the first indication is provided in a TXS mode subfield of the MRTT frame.

Clause 17. The method of any one of clauses 1-16, wherein the first indication comprises a TXS mode subfield in the common info field as equal to 3.

Clause 18. The method of any one of clauses 1-17, wherein the second indication is provided in the common info field of the MRTT frame.

Clause 19. The method of any one of clauses 1-18, wherein the second frame, the third frame and the fourth frame are physical layer protocol data units (PPDUs).

Clause 20A. A method, comprising: receiving, by a first station from an access point, a first frame comprising: a first time period, of a transmission opportunity (TXOP), allocated to the access point; a second time period, of the TXOP, allocated to the first station; and a first indication indicating that the first time period and the second time period are for a transmission between the access point and a second station via the first station.

Clause 20B. The method of clause 20A, receiving, by the first station from the access point, a second frame during the first time period.

Clause 20C. The method of clauses 20B, sending, by the first station to the second station, a third frame during the second time period. Reference to clause 20 herein may refer to one or each of clause 20A, clause 20B and clause 20C.

Clause 21. The method of any one of clauses 1-20, further comprising: sending, by the first station to the second station, the third frame after sending an acknowledgement (ACK) frame or clear-to-send (CTS) frame to the access point.

Clause 22. The method of any one of clauses 1-21, wherein the second time period is a short inter-frame space (SIFS) after the first time period.

Clause 23. The method of any one of clauses 1-22, wherein the first frame further comprises a third time period, of the TXOP, allocated to the second station; the third time period has a duration of zero; and the third time period indicates that the second station is a destination of the transmission.

Clause 24. The method of any one of clauses 1-23, wherein: the first frame further comprises a third time period, of the TXOP, allocated to the second station; the first frame further comprises a fourth time period, of the TXOP, allocated to a third station; the fourth time period is after the third time period; the fourth time period, with a duration of zero, indicates that the third station is a destination station of the transmission; and the third time period is configured for a reception, by the third station and from the second station, of a fourth frame.

Clause 25. The method of any one of clauses 1-24, wherein: the first frame comprises a multi-user request-to-send triggered TXOP sharing (MU-RTS TXS) trigger (MRTT) frame; and the first indication is provided in a TXS mode subfield of the MRTT frame.

Clause 26. The method of any one of clauses 1-25, further comprising receiving, by the first station from the access point, a second frame during the first time period, and sending, by the first station to the second station, a third frame during the second time period.

Clause 27. The method of any one of clauses 1-26, wherein the first time period is before the second time period.

Clause 28. The method of any one of clauses 1-27, wherein the first frame further comprises a second indication of whether the second frame is an uplink transmission or a downlink transmission.

Clause 29. The method of any one of clauses 1-28, wherein the second indication indicates that the transmission is a downlink transmission, and wherein a first user info field comprising the first time precedes in the first frame a second user info field comprising the second time period.

Clause 30. The method of any one of clauses 1-28, wherein the first indication is provided by a triggered TXOP sharing (TXS) mode indicated by the first frame.

Clause 31. The method of any one of clauses 1-30, wherein the first indication comprises a TXS mode subfield in the common info field as equal to 3.

Clause 32. The method of any one of clauses 1-31, wherein the second indication is provided in the common info field of the MRTT frame.

Clause 33. The method of any one of clauses 1-32, wherein the second frame, the third frame and the fourth frame are physical layer protocol data units (PPDUs).

Clause 34. A method, comprising: sending, by an access point, a first frame comprising: a first time period, of a transmission opportunity (TXOP), allocated to a first station; a second time period, of the TXOP, allocated to a second station; and a first indication indicating that the first time period and the second time period are for a transmission between the access point and the second station via the first station.

Clause 35. The method of clause 34, further comprising: receiving, by the access point from the first station, a second frame during the first time period, wherein the first time period is after the second time period.

Clause 36. The method of any one of clauses 34-35, wherein: the second time period is configured for a reception, by the first station and from the second station, of a third frame; the second frame is based on the third frame; the first frame further comprises a third time period, of the TXOP, allocated to a third station; the third time period is before the second time period; and the third time period is configured for a reception, by the second station and from the third station, of a fourth frame.

Clause 37. The method of any one of clauses 34-36, further comprising: sending, by the access point to the first station, a second frame before the first time period; and wherein: the first time period is before the second time period; and the second time period is a short inter-frame space (SIFS) after the first time period.

Clause 38. The method of any one of clauses 34-37, wherein: the first frame further comprises a third time period, of the TXOP, allocated to a third station; the third time period is after the second time period; the third time period with a duration of zero indicates that the third station is a destination station of the transmission; and the second time period is configured for a reception, by the third station and from the second station, of a fourth frame.

Clause 39. The method of any one of clauses 34-38, wherein: the first indication is provided by a triggered TXOP sharing (TXS) mode indicated by the first frame; the first frame comprises a multi-user request-to-send triggered TXOP sharing (MU-RTS TXS) trigger (MRTT) frame; and the first indication is provided in a TXS mode subfield of the MRTT frame.

Clause 40. The method of any one of clauses 34-39, wherein the first time period is a short inter-frame space (SIFS) after the second time period.

Clause 41. The method of any one of clauses 34-40, wherein the first frame further comprises a third time period, of the TXOP, allocated to a third station, the third time period being before the second time period, and wherein the third time period is configured for a reception, by the second station and from the third station, receives a fourth frame.

Clause 42. The method of any one of clauses 34-41, wherein the first station sends to the second station a third frame during the first time period.

Clause 43. The method of any one of clauses 34-42, wherein the second time period has a duration of zero, and wherein the duration of zero of the second time period indicates that the second station is a destination station of the transmission.

Clause 44. The method of any one of clauses 34-43, wherein the first frame further comprises a second indication of whether the second frame is an uplink transmission or a downlink transmission.

Clause 45. The method of any one of clauses 34-44, wherein the first indication is provided by a triggered TXOP sharing (TXS) mode indicated by the first frame.

Clause 46. The method of any one of clauses 34-45, wherein the TXS mode subfield is provided in a common info field of the MRTT frame, and wherein the TXS mode subfield is set to 3.

Clause 47. The method of any one of clauses 34-46, wherein the second indication is provided in the common info field of the MRTT frame.

Clause 48. The method of any one of clauses 34-47, wherein the second frame, the third frame and the fourth frame are physical layer protocol data units (PPDUs).

Clause 49. A method, comprising: sending, by an access point, a first frame comprising: a first time period, of a transmission opportunity (TXOP), allocated to the access point; a second time period, of the TXOP, allocated to a first station; and a first indication that the first time period and the second time period are for a transmission between the access point and a second station via the first station.

Clause 50. The method of clause 34-49, further comprising sending, by the access point to the first station, a second frame during the first time period.

Clause 51. The method of any one of clauses 34-50, wherein the first time period is before the second time period.

Clause 52. The method of any one of clauses 34-51, wherein the second time period is a short inter-frame space (SIFS) after the first time period.

Clause 53. The method of any one of clauses 34-52, wherein the second time period is configured for a transmission, by the first station and to the second station, a third frame.

Clause 54. The method of any one of clauses 34-53, wherein the first frame further comprises a third time period, of the TXOP, allocated to the second station.

Clause 55. The method of any one of clauses 34-55, wherein the third time period has a duration of zero, and wherein the duration of zero of the third time period indicates that the second station is a destination station of the transmission.

Clause 56. The method of any one of clauses 34-55, wherein the first frame further comprises a fourth time period, of the TXOP, allocated to a third station, the fourth time period being after the third time period, wherein the duration of zero of the fourth time period indicates that the third station is a destination station of the transmission, and wherein the third time period is configured for a reception, by the third station and from the second station, a fourth frame.

Clause 57. The method of any one of clauses 34-56, wherein the first frame further comprises a second indication of whether the second frame is an uplink transmission or a downlink transmission.

Clause 58. The method of any one of clauses 34-57, wherein the second indication indicates that the transmission is a downlink transmission, and wherein a first user info field comprising the first time precedes in the first frame a second user info field comprising the second time period.

Clause 59. The method of any one of clauses 34-58, wherein the first indication is provided by a triggered TXOP sharing (TXS) mode indicated by the first frame.

Clause 60. The method of any one of clauses 34-59, wherein the first frame comprises a multi-user request-to-send triggered TXOP sharing (MU-RTS TXS) trigger (MRTT) frame, and wherein the first indication is provided in a TXS mode subfield of the MRTT frame.

Clause 61. The method of any one of clauses 34-60, wherein the first indication comprises a TXS mode subfield in the common info field as equal to 3.

Clause 62. The method of any one of clauses 34-61, wherein the second indication is provided in the common info field of the MRTT frame.

Clause 63. The method of any one of clauses 34-62, wherein the second frame, the third frame and the fourth frame are physical layer protocol data units (PPDUs).

A first station may perform a method comprising multiple operations. The first station may receive, from an access point, a first frame comprising: a first time period, of a transmission opportunity (TXOP), allocated to the first station; a second time period, of the TXOP, allocated to a second station; a first indication indicating that the first time period and the second time period are for a transmission between the access point and the second station via the first station; and a second indication indicating that the transmission may be: a downlink transmission; or an uplink transmission. The first station may receive, from the access point, a second frame during the first time period; and may send, to the second station, a third frame during the second time period. The first station may receive, from the second station, a second frame during the second time period, and send, to the access point, a third frame during the first time period. The first station may receive, from the access point, a second frame before the first time period; may send, to the second station, a third frame during the first time period; and may send, to the second station, the third frame after sending an acknowledgement (ACK) frame or a clear-to-send (CTS) frame to the access point, wherein: the first frame further may comprise a third time period, of the TXOP, allocated to a third station; the third time period is before the second time period; and the third time period may be configured for a reception, by the second station and from the third station, of a fourth frame; wherein: the first frame further may comprise a third time period, of the TXOP, allocated to a third station; the third time period may be after the second time period; the third time period, with a duration of zero, indicates that the third station may be a destination station of the transmission; and the second period may be configured for a reception, by the third station and from the second station, of a fourth frame; wherein: the second indication may indicate that the transmission is a downlink transmission; and a first user info field comprising the first time period precedes, in the first frame, a second user info field comprising the second time period; wherein: the second indication may indicate that the transmission is an uplink transmission; and a first user info field comprising the first time period follows in the first frame a second user info field comprising the second time period; wherein the first time period may be after the second time period; wherein the first time period may be a short inter-frame space (SIFS) after the second time period; wherein the first time period may be before the second time period; wherein the second time period may be a short inter-frame space (SIFS) after the first time period; wherein the second time period may have a duration of zero; and the duration of zero of the second time period may indicate that the second STA is a destination STA of the transmission; wherein the first frame may further comprise a second indication of whether the second frame may be an uplink transmission or a downlink transmission; wherein the first indication may be provided by a triggered TXOP sharing (TXS) mode indicated by the first frame; wherein the first frame may comprise a multi-user request-to-send triggered TXOP sharing (MU-RTS TXS) trigger (MRTT) frame, and wherein the first indication may be provided in a TXS mode subfield of the MRTT frame; wherein the first indication may comprise a TXS mode subfield in the common info field as equal to 3; wherein the second indication may be provided in the common info field of the MRTT frame; wherein the second frame, the third frame and the fourth frame may be physical layer protocol data units (PPDUs). A computing device may comprise: one or more processors; and memory storing instructions that, when executed by the one or more processors, cause the computing device to perform the described method, additional operations and/or include the additional elements. A system comprising: a first station configured to perform the described method, additional operations and/or include the additional elements; and a access point configured to send a first frame. A computer-readable medium storing instructions that, when executed, cause performance of the described method, additional operations and/or include the additional elements.

A first station may perform a method comprising multiple operations. The first station may receive, from an access point, a first frame comprising: a first time period, of a transmission opportunity (TXOP), allocated to the access point; a second time period, of the TXOP, allocated to the first station; and a first indication indicating that the first time period and the second time period may be for a transmission between the access point and a second station via the first station. The first station may receive, from the access point, a second frame during the first time period. The first station may send, to the second station, a third frame during the second time period. The first station may send, to the second station, the third frame after sending an acknowledgement (ACK) frame or clear-to-send (CTS) frame to the access point, wherein the second time period may be a short inter-frame space (SIFS) after the first time period; wherein the first frame may further comprise a third time period, of the TXOP, allocated to the second station; the third time period has a duration of zero; and the third time period indicates that the second station is a destination of the transmission; wherein: the first frame further comprises a third time period, of the TXOP, allocated to the second station; the first frame may further comprise a fourth time period, of the TXOP, allocated to a third station; the fourth time period is after the third time period; the fourth time period, with a duration of zero, may indicate that the third station is a destination station of the transmission; and the third time period may be configured for a reception, by the third station and from the second station, of a fourth frame; wherein: the first frame may comprise a multi-user request-to-send triggered TXOP sharing (MU-RTS TXS) trigger (MRTT) frame; and the first indication may be provided in a TXS mode subfield of the MRTT frame. The first station may receive, by the first station from the access point, a second frame during the first time period, and may send, to the second station, a third frame during the second time period, wherein the first time period may be before the second time period; wherein the first frame may further comprise a second indication of whether the second frame is an uplink transmission or a downlink transmission; wherein the second indication may indicate that the transmission is a downlink transmission, and wherein a first user info field may comprise the first time precedes in the first frame a second user info field comprising the second time period; wherein the first indication may be provided by a triggered TXOP sharing (TXS) mode indicated by the first frame; wherein the first indication may comprise a TXS mode subfield in the common info field as equal to 3; wherein the second indication may be provided in the common info field of the MRTT frame; wherein the second frame, the third frame and the fourth frame may be physical layer protocol data units (PPDUs). A computing device may comprise: one or more processors; and memory storing instructions that, when executed by the one or more processors, cause the computing device to perform the described method, additional operations and/or include the additional elements. A system comprising: a first station configured to perform the described method, additional operations and/or include the additional elements; and a access point configured to send a first frame. A computer-readable medium storing instructions that, when executed, cause performance of the described method, additional operations and/or include the additional elements.

An access point may perform a method comprising multiple operations. The access point may send, a first frame comprising: a first time period, of a transmission opportunity (TXOP), allocated to a first station; a second time period, of the TXOP, allocated to a second station; and a first indication indicating that the first time period and the second time period are for a transmission between the access point and the second station via the first station. The access point may receive, from the first station, a second frame during the first time period, wherein the first time period is after the second time period, wherein: the second time period may be configured for a reception, by the first station and from the second station, of a third frame; the second frame may be based on the third frame; the first frame may further comprise a third time period, of the TXOP, allocated to a third station; the third time period may be before the second time period; and the third time period may be configured for a reception, by the second station and from the third station, of a fourth frame. The access point may send, to the first station, a second frame before the first time period; and wherein: the first time period may be before the second time period; and the second time period may be a short inter-frame space (SIFS) after the first time period, wherein: the first frame may further comprise a third time period, of the TXOP, allocated to a third station; the third time period may be after the second time period; the third time period with a duration of zero may indicate that the third station is a destination station of the transmission; and the second time period may be configured for a reception, by the third station and from the second station, of a fourth frame; wherein: the first indication may be provided by a triggered TXOP sharing (TXS) mode indicated by the first frame; the first frame may comprise a multi-user request-to-send triggered TXOP sharing (MU-RTS TXS) trigger (MRTT) frame; and the first indication may be provided in a TXS mode subfield of the MRTT frame; wherein the first time period may be a short inter-frame space (SIFS) after the second time period; wherein the first frame may further comprise a third time period, of the TXOP, allocated to a third station, the third time period being before the second time period, and wherein the third time period may be configured for a reception, by the second station and from the third station, receives a fourth frame; wherein the first station may send to the second station a third frame during the first time period; wherein the second time period may have a duration of zero, and wherein the duration of zero of the second time period may indicate that the second station is a destination station of the transmission; wherein the first frame may further comprise a second indication of whether the second frame is an uplink transmission or a downlink transmission; wherein the first indication may be provided by a triggered TXOP sharing (TXS) mode indicated by the first frame; wherein the TXS mode subfield may be provided in a common info field of the MRTT frame, and wherein the TXS mode subfield may be set to 3; wherein the second indication may be provided in the common info field of the MRTT frame; wherein the second frame, the third frame and the fourth frame may be physical layer protocol data units (PPDUs). A computing device may comprise: one or more processors; and memory storing instructions that, when executed by the one or more processors, cause the computing device to perform the described method, additional operations and/or include the additional elements. A system comprising: an access point configured to perform the described method, additional operations and/or include the additional elements; and a first station configured to receive a first frame. A computer-readable medium storing instructions that, when executed, cause performance of the described method, additional operations and/or include the additional elements.

An access point may perform a method comprising multiple operations. The access point may send a first frame comprising: a first time period, of a transmission opportunity (TXOP), allocated to the access point; a second time period, of the TXOP, allocated to a first station; and a first indication that the first time period and the second time period are for a transmission between the access point and a second station via the first station. The access point may send a second frame during the first time period, wherein the first time period may be before the second time period; wherein the second time period may be a short inter-frame space (SIFS) after the first time period; wherein the second time period may be configured for a transmission, by the first station and to the second station, a third frame; wherein the first frame may further comprise a third time period, of the TXOP, allocated to the second station; wherein the third time period may have a duration of zero, and wherein the duration of zero of the third time period indicates that the second station is a destination station of the transmission; wherein the first frame may further comprise a fourth time period, of the TXOP, allocated to a third station, the fourth time period being after the third time period, wherein the duration of zero of the fourth time period may indicate that the third station is a destination station of the transmission, and wherein the third time period may be configured for a reception, by the third station and from the second station, a fourth frame; wherein the first frame may further comprise a second indication of whether the second frame is an uplink transmission or a downlink transmission; wherein the second indication may indicate that the transmission is a downlink transmission, and wherein a first user info field may comprise the first time precedes in the first frame a second user info field comprising the second time period; wherein the first indication may be provided by a triggered TXOP sharing (TXS) mode indicated by the first frame; wherein the first frame may comprise a multi-user request-to-send triggered TXOP sharing (MU-RTS TXS) trigger (MRTT) frame, and wherein the first indication may be provided in a TXS mode subfield of the MRTT frame; wherein the first indication may comprise a TXS mode subfield in the common info field as equal to 3; wherein the second indication may be provided in the common info field of the MRTT frame; wherein the second frame, the third frame and the fourth frame may be physical layer protocol data units (PPDUs). A computing device may comprise: one or more processors; and memory storing instructions that, when executed by the one or more processors, cause the computing device to perform the described method, additional operations and/or include the additional elements. A system comprising: an access point configured to perform the described method, additional operations and/or include the additional elements; and a first station configured to receive a first frame. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (stations), non-AP stations, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a first station from an access point, a first frame comprising:
a first time period, of a transmission opportunity (TXOP), allocated to the first station;
a second time period, of the TXOP, allocated to a second station;
a first indication indicating that the first time period and the second time period are for a transmission between the access point and the second station via the first station; and
a second indication indicating that the transmission is:
a downlink transmission; or
an uplink transmission.

2. The method of claim 1, further comprising:
receiving, by the first station from the access point, a second frame during the first time period; and
sending, by the first station to the second station, a third frame during the second time period.

3. The method of any one of claims 1-2, further comprising:
receiving, by the first station from the second station, a second frame during the second time period, and
sending, by the first station to the access point, a third frame during the first time period.

4. The method of any one of claims 1-3, further comprising:
receiving, by the first station from the access point, a second frame before the first time period;
sending, by the first station to the second station, a third frame during the first time period; and
sending, by the first station to the second station, the third frame after sending an acknowledgement (ACK) frame or a clear-to-send (CTS) frame to the access point.

5. The method of any one of claims 1-4, wherein:
the first frame further comprises a third time period, of the TXOP, allocated to a third station;
the third time period is before the second time period; and
the third time period is configured for a reception, by the second station and from the third station, of a fourth frame.

6. The method of any one of claims 1-5, wherein:
the first frame further comprises a third time period, of the TXOP, allocated to a third station;
the third time period is after the second time period;
the third time period, with a duration of zero, indicates that the third station is a destination station of the transmission; and
the second period is configured for a reception, by the third station and from the second station, of a fourth frame.

7. The method of any one of claims 1-6, wherein:
the second indication indicates that the transmission is a downlink transmission; and
a first user info field comprising the first time period precedes, in the first frame, a second user info field comprising the second time period.

8. The method of any one of claims 1-7, wherein:
the second indication indicates that the transmission is an uplink transmission; and
a first user info field comprising the first time period follows in the first frame a second user info field comprising the second time period.

9. The method of any one of claims 1-8, further comprising:
sending, by the first station to the second station, the third frame after sending an acknowledgement (ACK) frame or clear-to-send (CTS) frame to the access point.

10. The method of any one of claims 1-9, wherein the second time period is a short inter-frame space (SIFS) after the first time period.

11. The method of any one of claims 1-10, wherein:
the first frame further comprises a third time period, of the TXOP, allocated to the second station;
the third time period has a duration of zero; and
the third time period indicates that the second station is a destination of the transmission.

12. The method of any one of claims 1-11, wherein:
the first frame further comprises a third time period, of the TXOP, allocated to the second station;
the first frame further comprises a fourth time period, of the TXOP, allocated to a third station;
the fourth time period is after the third time period;
the fourth time period, with a duration of zero, indicates that the third station is a destination station of the transmission; and
the third time period is configured for a reception, by the third station and from the second station, of a fourth frame.

13. A computing device comprising:
one or more processors; and
memory storing instructions that, when executed by the one or more processors, cause the computing device to perform the method of any one of claims 1-12.

14. A system comprising:
a first station configured to perform the method of any one of claims 1-12; and
an access point configured to send a first frame.

15. A computer-readable medium storing instructions that, when executed, cause performance of the method of any one of claims 1-12
